# EUROPEAN PATENT APPLICATION

(11) **EP 4 693 366 A1**
(43) Date of publication of application: **11.02.2026**
(21) Application number: 25190244.1
(22) Date of filing: 17.07.2025
(51) Int. Cl.: H01J 49/00

(54) **MULTIPLEXED ION PRE-SEPARATION FOR MASS SPECTROMETRY**

(30) Priority: 05.08.2024 US 202418794310
(71) Applicant: Thermo Finnigan LLC, San Jose, CA 95134 (US)
(72) Inventor: UGAROV, Mikhail V., San Jose (US)
(74) Representative: Boult Wade Tennant LLP

(57) **Abstract**

A system includes a pre-separation device for separating precursor ions into a set of distinct fractions of precursor ions based on a physical property of the precursor ions and for sequentially transferring a first subset of distinct fractions of precursor ions included in the set of distinct fractions of precursor ions. The system further includes a mass spectrometer positioned downstream of the pre-separation device for receiving the first subset of distinct fractions of precursor ions. The mass spectrometer includes an ion store for accumulating a first population of product ions produced from each distinct fraction of precursor ions included in the first subset of distinct fractions of precursor ions and a mass analyzer for performing a mass analysis of the first population of product ions.

## Description

### BACKGROUND INFORMATION

A mass spectrometer is an instrument that may be used to detect, identify, and/or quantify molecules based on the mass-to-charge ratio (m/z) of ions produced from the molecules. A mass spectrometer generally includes an ion source for producing ions from molecules included in a sample, a mass analyzer for separating the ions based on their m/z, and an ion detector for detecting the separated ions. The mass spectrometer may include or be connected to a computer-based software platform that uses data from the ion detector to construct a mass spectrum that shows a relative abundance of each of the detected ions as a function of m/z. The mass spectrum may be used to detect and quantify molecules in simple and complex mixtures.

In some mass spectrometry experiments, such as multi-stage mass spectrometry (MSn where n is 2 or more) or tandem mass spectrometry (a form of multi-stage mass spectrometry where n is 2, often denoted MS/MS or MS2), certain ions are isolated and then fragmented in a controlled manner to yield product ions. A mass analysis is then performed on the product ions to generate mass spectra of the product ions. The mass spectra of the product ions provide information that may be used to confirm identification, determine quantity, and/or derive structural details regarding analytes of interest.

Various techniques may be used to acquire mass spectra using multi-stage mass spectrometry. One commonly used technique is data-dependent acquisition (DDA), which uses data acquired in one mass analysis to select, based on predetermined criteria, one or more ion species or a narrow m/z range for isolation and fragmentation of the selected ion species and subsequent mass analysis of the fragment ions (product ions). For example, a mass spectrometer may perform a full MS survey scan of precursor ions over a wide precursor m/z range and then select one or more precursor ion species from the resulting spectra for subsequent MS/MS or MSn analysis. The criteria for selection of precursor ion species may include intensity, charge state, m/z, inclusion/exclusion lists, or isotopic patterns.

In contrast to DDA, data-independent acquisition (DIA) is a technique in which all precursor ion species within a wide precursor m/z range (e.g., 500 - 900 m/z) are isolated and fragmented via a sequentially advancing isolation window of a fixed m/z width (e.g., 10 m/z, 20 m/z, etc.) to generate product ions. An MS/MS or MSn analysis is then performed on the product ions in a methodical and unbiased manner. The acquisition of the set of mass spectra spanning the full precursor m/z range constitutes one acquisition cycle, which is repeated to generate MS/MS or MSn mass spectra of the product ions. In the DIA technique, isolation and fragmentation of one or more precursor ion species is not dependent on data acquired in a survey mass analysis, as in DDA.

However, due to limitations in instrument speed and sensitivity, there is tension among the isolation width and the precursor m/z range. Generally, wider isolation widths enable a wider precursor m/z range and thus analysis of a greater number of precursor ion species but produce lower quality data because a wide isolation window may result in co-isolation and co-fragmentation of neighboring analytes, resulting in complex, unidentifiable, or low scoring spectra. On the other hand, narrower isolation windows produce better quality data with greater sensitivity at the expense of fewer precursor ion species that may be analyzed due to the narrower precursor m/z range. For example, at the extreme of very narrow isolation widths, the data have the highest quality in terms of sensitivity and selectivity, but the smallest range of precursor ion species are analyzed. Such narrow isolation widths may decrease the duty cycle for the MS analysis by filtering out a large number of precursor ions outside of the narrow isolation widths. The duty cycle for the MS analysis may refer to an amount (e.g., a ratio, a percentage, a number, etc.) of precursor ions produced by the ion source that are effectively analyzed during the MS analysis. Due to filtering out a large number of precursor ions during MS analyses with narrow isolation widths, a lower number of precursor ions are analyzed such that the duty cycle is decreased.

### SUMMARY

The following description presents a simplified summary of one or more aspects of the methods and systems described herein to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects of the methods and systems described herein in a simplified form as a prelude to the more detailed description that is presented below.

In some illustrative examples, a system comprises: one or more processors; and memory storing executable instructions that, when executed by the one or more processors, cause a computing device to: direct a pre-separation device to separate precursor ions into a set of distinct fractions of precursor ions based on a physical property of the precursor ions; direct the pre-separation device to sequentially transfer a first subset of distinct fractions of precursor ions included in the set of distinct fractions of precursor ions to a mass spectrometer; direct the mass spectrometer to sequentially produce product ions from each distinct fraction of precursor ions included in the first subset of distinct fractions of precursor ions; direct the mass spectrometer to accumulate, in an ion store over an accumulation time, a first population of product ions, the first population of product ions including the product ions produced from each distinct fraction of precursor ions included in the first subset of distinct fractions of precursor ions; and direct the mass spectrometer to transfer the first population of product ions to a mass analyzer for a mass analysis of the first population of product ions.

In some illustrative examples, a system comprises: a pre-separation device configured to separate precursor ions into a set of distinct fractions of precursor ions based on a physical property of the precursor ions and to sequentially transfer a first subset of distinct fractions of precursor ions included in the set of distinct fractions of precursor ions; and a mass spectrometer positioned downstream of the pre-separation device and configured to receive the first subset of distinct fractions of precursor ions, the mass spectrometer comprising: an ion store configured to accumulate a first population of product ions produced from each distinct fraction of precursor ions included in the first subset of distinct fractions of precursor ions; and a mass analyzer configured to perform a mass analysis of the first population of product ions.

In some illustrative examples, a non-transitory computer-readable medium stores instructions that, when executed, direct at least one processor of a computing device for mass spectrometry to perform a process comprising: directing a pre-separation device to separate precursor ions into a set of distinct fractions of precursor ions based on a physical property of the precursor ions; directing the pre-separation device to sequentially transfer a first subset of distinct fractions of precursor ions included in the set of distinct fractions of precursor ions to a mass spectrometer; directing the mass spectrometer to sequentially produce product ions from each distinct fraction of precursor ions included in the first subset of distinct fractions of precursor ions; directing the mass spectrometer to accumulate, in an ion store over an accumulation time, a first population of product ions, the first population of product ions including the product ions produced from each distinct fraction of precursor ions included in the first subset of distinct fractions of precursor ions; and directing the mass spectrometer to transfer the first population of product ions to a mass analyzer for a mass analysis of the first population of product ions.

### BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.
FIG. 1 shows a functional diagram of an illustrative multiplexed ion pre-separation MS/MS system.
FIG. 2 shows a functional diagram of an illustrative multiplexed ion pre-separation control module.
FIG. 3 shows an illustrative method of performing a multiplexed ion pre-separation for mass spectrometry.
FIG. 4 shows an illustrative implementation of the method of FIG. 3.
FIGS. 5A-6B show illustrative schematics of timing schemes for performing the method of FIG. 3.
FIG. 7 shows another illustrative implementation of the method of FIG. 3.
FIG. 8 shows an illustrative computing device that may be specifically configured to perform one or more of the processes described herein.

### DETAILED DESCRIPTION

Systems, apparatuses, and methods of performing multiplexed ion pre-separation for mass spectrometry are described herein. For example, a mass spectrometry system may include a pre-separation device configured to separate precursor ions into a set of distinct fractions of precursor ions based on a physical property (e.g., ion mobility, m/z, etc.) of the precursor ions and to sequentially transfer a first subset of distinct fractions of precursor ions included in the set of distinct fractions of precursor ions. The mass spectrometry system may further include a mass spectrometer positioned downstream of the pre-separation device and configured to receive the first subset of distinct fractions of precursor ions. The mass spectrometer may include an ion store configured to accumulate a first population of product ions produced from each distinct fraction of precursor ions included in the first subset of distinct fractions of precursor ions and a mass analyzer configured to perform a mass analysis of the first population of product ions.

The systems, apparatuses, and methods described herein improve the duty cycle for MS analyses, as compared with traditional MS analysis techniques, by providing a multiplexed pre-separation of multiple distinct fractions of precursor ions. For example, pre-separating the precursor ions into subsets of precursor ions according to a physical property of the precursor ions preserves the precursor ions while the precursor ions are waiting to be transferred to the mass spectrometer for MS analysis. Moreover, such multiplexed pre-separation of precursor ions from multiple distinct fractions of precursor ions may allow the detection and/or quantification of several analyte ions without overloading the mass spectrometer, improve the efficiency of the mass analysis, and reduce charge loads of the ion pre-separation, as compared to MS analysis techniques without multiplexed pre-separation. Performing MS analysis techniques without multiplexed pre-separation of multiple distinct fractions of precursor ions, which techniques may store precursor ions in a single space while single fractions of precursor ions are slowly scanned from a full sample injection, may require a high charge capacity, limit an amount of the sample injected, and/or waste precursor ions from the sample unable to be stored. Alternatively, multiplexed pre-separation of multiple distinct fractions of precursor ions, as described herein, may lower the charge capacity needed to store precursor ions, increase an amount of the sample injected, and/or maintain precursor ions from the sample, such as by pre-separating the precursor ions to spread a charge of precursor ions over space and/or time. Accordingly, the multiplexed pre-separation of multiple distinct fractions of precursor ions improves the duty cycle of the MS analysis, as compared with traditional MS analysis techniques.

Various embodiments will now be described in more detail with reference to the figures. The systems and methods described herein may provide one or more of the benefits mentioned above and/or various additional and/or alternative benefits that will be made apparent herein.

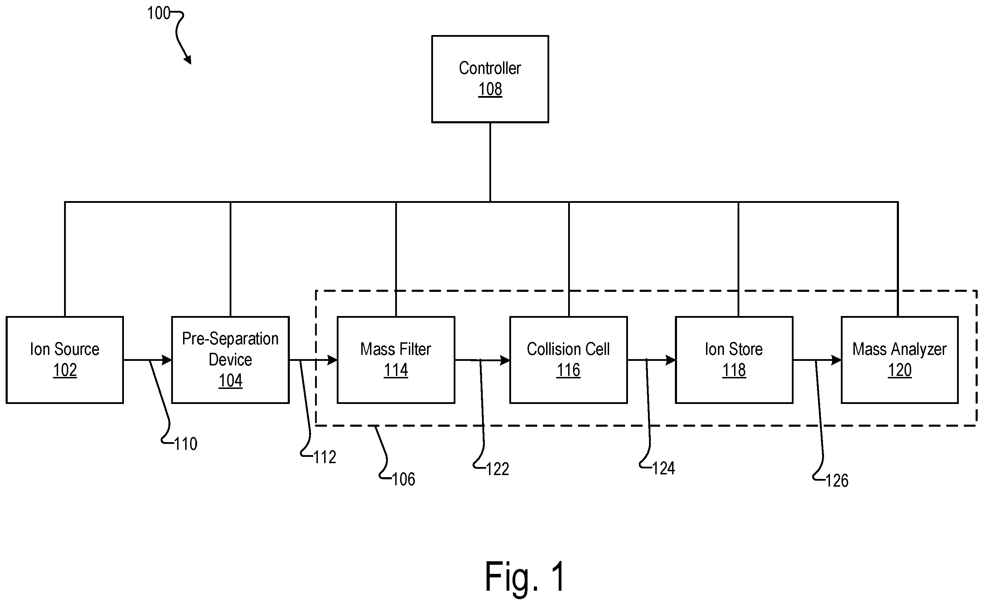

FIG. 1 shows a functional diagram of an illustrative multiplexed ion pre-separation MS/MS system 100 ("system 100"). System 100 includes an ion source 102, a pre-separation device 104, a mass spectrometer 106, and a controller 108. Mass spectrometer 106 may be implemented by a multi-stage mass spectrometer configured to perform multi-stage mass spectrometry (also denoted MSn). In some examples, as shown in FIG. 1, mass spectrometer 106 is a tandem mass spectrometer configured to perform tandem mass spectrometry. Tandem mass spectrometry (MS/MS) is a form of multi-stage mass spectrometry (MSn) where the number of stages (n) is 2. As used herein, multi-stage mass spectrometry refers to MS/MS as well as MSn mass spectrometry where n is greater than two.

Ion source 102 is configured to produce a stream 110 of precursor ions from components included in a sample and deliver the precursor ions to pre-separation device 104. Ion source 102 may use any suitable ionization technique, including without limitation, electron ionization, chemical ionization, matrix assisted laser desorption/ionization, electrospray ionization, atmospheric pressure chemical ionization, atmospheric pressure photoionization, or inductively coupled plasma. Ion source 102 may include various components for producing precursor ions from components included in a sample and delivering stream 110 of precursor ions to pre-separation device 104.

Pre-separation device 104 is configured to separate the precursor ions received from ion source 102 into a set of distinct fractions 112 of precursor ions based on a physical property of the precursor ions and sequentially transfer a subset of distinct fractions 112 of precursor ions included in the set of distinct fractions 112 to mass spectrometer 106. The physical property of the precursor ions may include, without limitation, a mobility of the precursor ions, an m/z of the precursor ions, or any other suitable property for separating precursor ions. To illustrate, pre-separation device 104 may use any suitable mobility separation technique, including, without limitation, trapped ion mobility separation (TIMS), drift ion mobility separation (e.g., including a drift tube and/or a structure for lossless ion manipulation (SLIM) enabled folded path separation), and differential mobility separation (DMA). Alternatively, pre-separation device 104 may use any suitable m/z separation device, including, without limitation, a mass filter, an ion accumulator, an ion sorter, an annular ion trap, and a linear ion trap. The m/z separation can be based on different principles that provide mass-dependent displacement of ions, such as RF-field induced pseudopotential, traveling waves of various types, resonance activation, and others. Pre-separation device 104 may include various components for separating precursor ions (e.g., from stream 110 of precursor ions) into the set of distinct fractions 112 of precursor ions based on a physical property of the precursor ions and sequentially transferring one or more subsets of distinct fractions 112 of precursor ions from pre-separation device 104 to mass spectrometer 106 (e.g., each distinct fraction 112 of precursor ions included in each subset of distinct fractions 112 are emitted one after another from pre-separation device 104).

Mass spectrometer 106 is positioned downstream of pre-separation device 104 and is configured to receive the subsets of distinct fractions 112 of precursor ions from pre-separation device 104 and perform a mass analysis of product ions produced from each subset of distinct fractions 112 of precursor ions. As shown, mass spectrometer 106 is tandem-in-space (e.g., has multiple mass filters and/or mass analyzers) and has two stages for performing MS/MS. However, mass spectrometer 106 is not limited to this configuration but may have any other suitable configuration. For example, mass spectrometer 106 may be tandem-in-time. Additionally or alternatively, mass spectrometer 106 may be a multi-stage mass spectrometer with three or more stages for performing multi-stage mass spectrometry (e.g., MS/MS/MS).

In the illustrated example, mass spectrometer 106 includes a mass filter 114, a collision cell 116, an ion store 118, and a mass analyzer 120. Mass spectrometer 106 may further include any additional or alternative components not shown as may suit a particular implementation (e.g., ion optics, filters, lenses, an autosampler, a detector, etc.). While ion source 102 and pre-separation device 104 are shown to be separate from, or outside of, mass spectrometer 106, in other examples ion source 102 and/or pre-separation device 104 are included in mass spectrometer 106.

Mass filter 114 is configured to isolate or separate precursor ions within each distinct fraction 112 of precursor ions included in each subset of distinct fractions 112 of precursor ions according to m/z of the precursor ions. Mass filter 114 may be implemented by any suitable mass filter, such as a quadrupole mass filter or an ion trap (e.g., a three-dimensional quadrupole ion trap, a cylindrical ion trap, a linear quadrupole ion trap, a toroidal ion trap, etc.). Mass filter 114 is configured to receive the distinct fractions 112 of precursor ions from pre-separation device 104 and, for each distinct fraction 112 of precursor ions, isolate precursor ions of a selected m/z range (e.g., an m/z range of an isolation window) and deliver packet 122 of precursor ions isolated from each distinct fraction 112 to collision cell 116. In some examples, the m/z range of mass filter 114 is adjusted, such as to isolate one or more target precursor ions from each distinct fraction 112 of precursor ions.

Collision cell 116 is configured to receive packets 122 of precursor ions isolated from each distinct fraction 112 of precursor ions included in each subset of distinct fractions 112 and produce product ions (e.g., fragment ions) via controlled dissociation processes. Collision cell 116 may be implemented by any suitable collision cell. As used herein, "collision cell" may encompass any structure or device configured to produce product ions via controlled dissociation processes and is not limited to devices employed for collisionally-activated dissociation. For example, collision cell 116 may be configured to fragment precursor ions using collision induced dissociation (CID), electron transfer dissociation (ETD), electron capture dissociation (ECD), photo induced dissociation (PID) (e.g., infrared multiphoton dissociation (IRMPD), blackbody infrared radiative dissociation (BIRD)), surface induced dissociation (SID), negative electron-transfer dissociation (NETD), electron-detachment dissociation (EDD), higher-energy C-trap dissociation (HCD), charge remote fragmentation, or ion/molecule reactions. Collision cell 116 directs packets 124 of product ions produced from each distinct fraction 112 included in each subset of distinct fractions 112 to ion store 118.

Ion store 118 is a device configured to accumulate, over an accumulation time, product ions included in packets 124 of product ions produced from the subset of distinct fractions 112 of precursor ions. To illustrate, for each subset of distinct fractions 112 of precursor ions, ion store 118 is configured to accumulate packets 124 of product ions produced from each distinct fraction 112 of precursor ions included in the subset of distinct fractions 112. As used herein, "accumulation time" refers to the duration of time during which product ions produced by collision cell 116 accumulate in ion store 118 prior to being released and transferred to mass analyzer 120. Accumulation time may also be known as ion injection time or ion fill time. In some examples, ion store 118 is an ion storage device configured to buffer down-stream processes, such as mass analysis, thereby increasing acquisition speed and instrument sensitivity. In some examples, ion store 118 is a beam-type device or a trapping device, such as a multipole ion guide (e.g., a quadrupole ion guide, a hexapole ion guide, an octapole ion guide, etc.), a linear quadrupole ion trap, a three-dimensional quadrupole ion trap, a cylindrical ion trap, a toroidal ion trap, an orbital electrostatic trap, or a Kingdon trap. In some examples, ion store 118 takes the form of a curved trap (also known as a C-trap) of the type used in orbital electrostatic trap mass spectrometers. In some other examples, ion store 118 comprises collision cell 116 (e.g., collision cell 116 is configured to accumulate ions).

The accumulation of ions in ion store 118 may be regulated to achieve a target population 126 of product ions in ion store 118. The accumulation of ions may be regulated in any suitable way. In some examples, the accumulation of ions in ion store 118 is regulated by a gate apparatus (not shown) that either transmits or blocks the flow of product ions. The gate may be opened for a given amount of time to meter the appropriate number of ions, after which the gate is closed. For each subset of distinct fractions 112 of precursor ions, the accumulated population 126 of product ions is transferred from ion store 118 to mass analyzer 120. It will be recognized that other techniques for the regulation of ion accumulation may be used.

Mass analyzer 120 is configured to filter and/or perform a mass analysis of the product ions included each population 126 of product ions. For example, mass analyzer 120 is configured to isolate or separate ions according to m/z of each of the ions. Mass analyzer 120 may be implemented by any suitable mass analyzer, such as a quadrupole mass filter, an ion trap (e.g., a three-dimensional quadrupole ion trap, a cylindrical ion trap, a linear quadrupole ion trap, a toroidal ion trap, etc.), a time-of-flight (TOF) mass analyzer, an electrostatic trap mass analyzer (e.g. an orbital electrostatic trap such as an Orbitrap^{™} mass analyzer, a Kingdon trap, etc.), or a Fourier transform ion cyclotron resonance (FT-ICR) mass analyzer.

An ion detector (not shown) is configured to detect ions at each of a variety of different m/z and responsively generate an electrical signal representative of ion intensity. The electrical signal is transmitted to controller 108 for processing, such as to construct a mass spectrum of the sample. For example, mass analyzer 120 may emit an emission beam of separated ions to the ion detector, which is configured to detect the ions in the emission beam and generate or provide data that can be used by controller 108 to construct a mass spectrum of the sample. The ion detector may be implemented by any suitable detection device, such as an electron multiplier or a Faraday cup. In some examples, the detector is included in or implemented by mass analyzer 120.

Pre-separation device 104 is synchronized with mass spectrometer 106 such that one or more operating parameters of mass spectrometer 106 is/are adjusted between successive transfers of distinct fractions 112 of precursor ions from pre-separation device 104 for mass analysis of the next distinct fraction 112 of precursor ions. The synchronization can be achieved using controller 108 as described in more detail below. For example, a collision energy of collision cell 116 and/or an m/z range of mass filter 114 may be adjusted based on the distinct fraction 112 of precursor ions prior to receiving each distinct fraction 112 of precursor ions. As used herein, the term "m/z range" refers to a width of the range of precursor ion masses that are isolated for each distinct fraction 112 of precursor ions. A population 126 of product ions may be accumulated in ion store 118 based on multiple m/z ranges (e.g., 1-50 m/z, 10-30 m/z, 10-20 m/z, etc.) within a precursor m/z range (e.g., 50-1600 m/z, 200-1200 m/z, 400-1000 m/z, etc.) so as to accumulate, during an accumulation event, product ions produced from multiple distinct fractions 112 of precursor ions. As used herein, the term "precursor m/z range" refers to the total range of m/z of the precursor ions over multiple distinct fractions 112 of precursor ions transferred to mass spectrometer 106 for a mass analysis.

In some examples, pre-separation device 104 is synchronized with mass filter 114 of mass spectrometer 106 such that the m/z range of the precursor ions included in each distinct fraction 112 of precursor ions transferred from pre-separation device 104 corresponds with the m/z range of mass filter 114. For example, the m/z range of the precursor ions included in each distinct fraction 112 may correspond with the m/z range of mass filter 114 by having an m/z range that is the same as the m/z range of mass filter 114, having an m/z range that is within the m/z mass filter 114, or having an m/z range that overlaps with the m/z range of mass filter 114. Pre-separation device 104 is configured to selectively transfer one or more distinct fractions 112 of precursor ions associated with the corresponding m/z range of mass filter 114 while retaining remaining distinct fractions 112 of precursor ions for subsequent transfer.

Controller 108 may be communicatively coupled with, and configured to control operations of, system 100 (e.g., ion source 102, pre-separation device 104, and mass spectrometer 106). Controller 108 may include any suitable hardware (e.g., a processor, circuitry, etc.) and/or software configured to control operations of and/or interface with the various components of system 100 (e.g., ion source 102, pre-separation device 104, and mass spectrometer 106).

To illustrate, controller 108 may be configured to control settings and operation of ion source 102, pre-separation device 104, mass filter 114, collision cell 116, ion store 118, and/or mass analyzer 120. For example, controller 108 may control an oscillatory voltage power supply and/or a DC power supply to supply a radio frequency (RF) voltage and/or a direct current (DC) voltage to pre-separation device 104, mass filter 114, and/or mass analyzer 120, adjust values of the RF voltage and DC voltage to select an effective m/z (including a mass tolerance window) for analysis, adjust a collision cell energy of collision cell 116, and adjust the sensitivity of the ion detector (e.g., by adjusting the detector gain).

Controller 108 may also include and/or provide a user interface configured to enable interaction between a user of mass spectrometer 106 and controller 108. The user may interact with controller 108 via the user interface by tactile, visual, auditory, and/or other sensory type communication. For example, the user interface may include a display device (e.g., liquid crystal display (LCD) display screen, a touch screen, etc.) for displaying information (e.g., mass spectra, notifications, etc.) to the user. The user interface may also include an input device (e.g., a keyboard, a mouse, a touchscreen device, etc.) that allows the user to provide input to controller 108. In other examples the display device and/or input device may be separate from, but communicatively coupled to, controller 108. For instance, the display device and the input device may be included in a computer (e.g., a desktop computer, a laptop computer, etc.) communicatively connected to controller 108 by way of a wired connection (e.g., by one or more cables) and/or a wireless connection.

Controller 108 may include any suitable hardware (e.g., a processor, circuitry, etc.) and/or software as may serve a particular implementation. FIG. 1 shows that controller 108 is implemented separately from mass spectrometer 106 (e.g., a computing device communicatively coupled to mass spectrometer 106 by way of a wired connection (e.g., a cable) and/or a network (e.g., a local area network, a wireless network (e.g., Wi-Fi), a wide area network, the Internet, a cellular data network, etc.)). Controller 108 may alternatively be included in whole or in part in mass spectrometer 106.

The pre-separation methods, systems, and apparatuses described herein may operate as part of or in conjunction with system 100 described herein and/or with any other suitable mass spectrometer or mass spectrometry system, including a combined separation-mass spectrometry system, such as a liquid chromatography-mass spectrometry system (LC-MS), a high-performance liquid chromatography-mass spectrometry (HPLC-MS) system, a gas chromatography-mass spectrometry (GC-MS) system, or a capillary electrophoresis-mass spectrometry (CE-MS) system. The methods, systems, and apparatuses described herein may also operate in conjunction with a continuous flow sample source, such as in flow-injection mass spectrometry (FI-MS) in which analytes are injected into a mobile phase without separation in a column and enter the mass spectrometer.

While FIG. 1 shows a single pre-separation device 104 as being positioned upstream of mass spectrometer 106, in some other examples, additional pre-separation devices 104 may be positioned upstream of mass spectrometer 106. For example, system 100 may include a first pre-separation device 104 configured to separate precursor ions according to mobility or m/z and a second pre-separation device 104 configured to separate precursor ions according to mobility or m/z. In some examples, system 100 is configured to separate precursor ions according to both mobility and m/z.

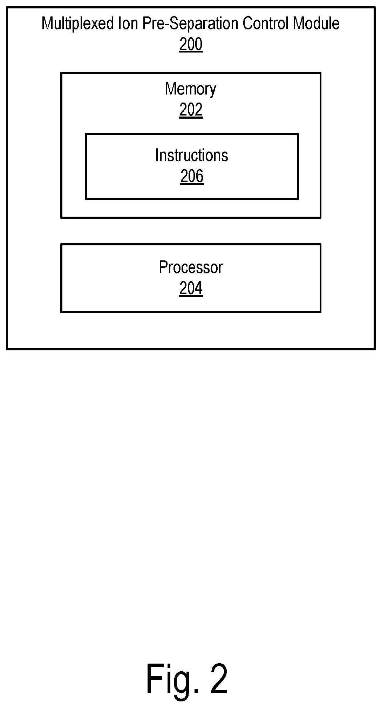

System 100 may be used in conjunction with a multiplexed ion pre-separation control module to perform multiplexed ion pre-separation of precursor ions. FIG. 2 shows a functional diagram of an illustrative multiplexed ion pre-separation control module 200 ("control module 200"). Control module 200 may be implemented entirely or in part by system 100 (e.g., by controller 108). Alternatively, control module 200 may be implemented separately from system 100 (e.g., a remote computing system or server separate from but communicatively coupled to controller 108).

Control module 200 may include, without limitation, a memory 202 and a processor 204 selectively and communicatively coupled to one another. Memory 202 and processor 204 may each include or be implemented by hardware and/or software components (e.g., processors, memories, communication interfaces, instruction stored in memory for execution by the processors, etc.). In some examples, memory 202 and processor 204 may be distributed between multiple devices and/or multiple locations as may serve a particular implementation.

Memory 202 may maintain (e.g., store) executable data used by processor 204 to perform any of the operations described herein. For example, memory 202 may store instructions 206 that may be executed by processor 204 to perform any of the operations described herein. Instructions 206 may be implemented by any suitable application, software, code, and/or other executable data instance.

Memory 202 may also maintain any data acquired, received, generated, managed, used, and/or transmitted by processor 204. For example, memory 202 may maintain hybridized ion pre-separation MS/MS data (e.g., acquired mass spectra data) and/or an ion pre-separation algorithm, as described below.

Processor 204 may be configured to perform (e.g., execute instructions 206 stored in memory 202 to perform) various processing operations described herein. For example, ion pre-separation control module 200 may control pre-separation devices to synchronize with a mass spectrometer such that an m/z range of the precursor ions emitted from the pre-separation devices correspond to a precursor m/z isolation window of the mass spectrometer. Ion pre-separation control module 200 may also control a mass spectrometer to acquire mass spectra of product ions derived from precursor ions isolated based on the precursor m/z isolation window.

It will be recognized that the operations and examples described herein are merely illustrative of the many different types of operations that may be performed by processor 204. In the description herein, any references to operations performed by control module 200 may be understood to be performed by processor 204 of control module 200. Furthermore, in the description herein, any operations performed by control module 200 may be understood to include control module 200 directing or instructing another system (e.g., system 100) or device (e.g., any component of system 100) to perform the operations.

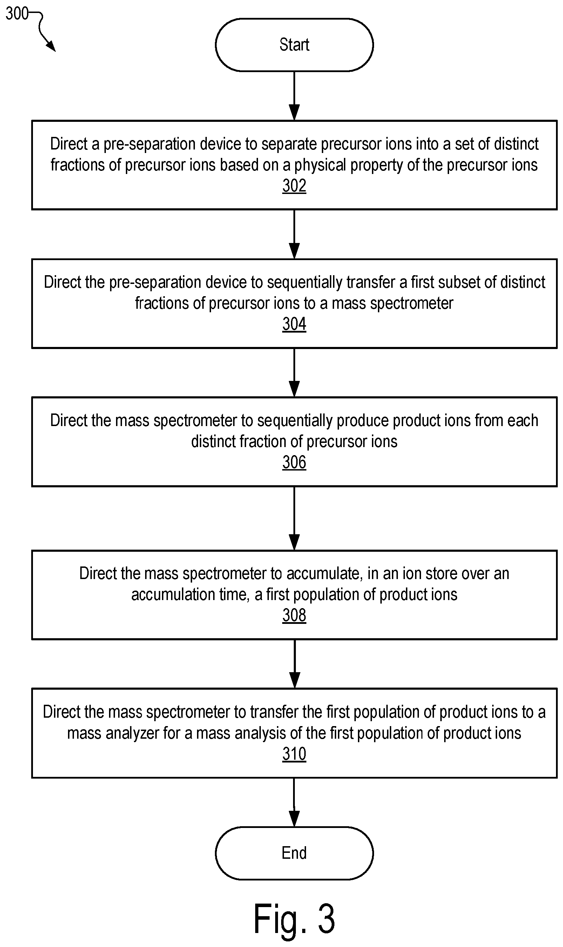

FIG. 3 shows an illustrative method 300 of performing multiplexed ion pre-separation. While FIG. 3 shows illustrative operations according to one embodiment, other embodiments may omit, add to, reorder, and/or modify any of the operations shown in FIG. 3. One or more of the operations shown in FIG. 3 may be performed by system 100 and/or control module 200, any components included therein, and/or any implementations thereof (e.g., mass spectrometer 106, one or more components of mass spectrometer 106, controller 108, and/or a remote computing system separate from but communicatively coupled to mass spectrometer 106).

Method 300 includes, at operation 302, directing a pre-separation device (e.g., pre-separation device 104) to separate precursor ions (e.g., received from ion source 102) into a set of distinct fractions (e.g., distinct fractions 112) of precursor ions based on a physical property of the precursor ions, such as ion mobility and/or m/z of the precursor ions. As an illustrative example, the physical property of the precursor ions includes a mobility of the precursor ions such that the pre-separation device includes a differential mobility analyzer having a differential mobility separator configured to spatially separate precursor ions according to ion mobility within a gas flow region of the pre-separation device. The gas flow region includes a flow of gas in a first direction and an electric field gradient in a second direction that is different than the first direction. As the precursor ions are carried downstream in the first direction by the flow of gas, the electric field gradient directs the precursor ions in the second direction. The precursor ions migrate through the gas flow region of the pre-separation device in accordance with ion mobility properties of the precursor ions and spatially separate from each other during the migration. For example, larger precursor ions (e.g., precursor ions having a greater cross-section) may travel more slowly in the second direction than smaller precursor ions (e.g., precursor ions having a smaller cross-section), which results in a separation of precursor ions along the first direction into distinct fractions of precursor ions. This separation allows each distinct fraction of precursor ions exiting the gas flow region of the pre-separation device to have a different range of ion mobilities relative to the other subsets of precursor ions exiting the gas flow region. For example, the smaller precursor ions may be separated into one distinct fraction of precursor ions while the larger precursor ions may be separated into another distinct fraction of precursor ions. The precursor ions may be separated into any suitable number of distinct fractions.

In some examples, directing the pre-separation device to separate the precursor ions includes directing the pre-separation device to provide the flow of gas and/or the electric field gradient within the gas flow region of the pre-separation device. Moreover, directing the pre-separation device to separate the precursor ions may include setting or controlling one or more parameters of the flow of gas (e.g., a speed of the flow of gas, a type of gas, a direction of the flow of gas, etc.) and/or the electric field gradient (e.g., an amount of the electric field gradient, a direction of the electric field gradient, a type of the electric field gradient, etc.) of the pre-separation device. To illustrate, the pre-separation device may be directed to apply the flow of gas and/or the electric field gradient at a constant gas flow rate and/or electric field gradient. Additionally or alternatively, the pre-separation device may be directed to vary the flow of gas and/or the electric field gradient over time.

In some examples, the pre-separation device includes a plurality of channels configured to receive and/or store precursor ions as the precursor ions exit the gas flow region. The plurality of channels may include ion traps, RF ion guides, DC ion lenses, or a combination thereof. In these examples, directing the pre-separation device to separate precursor ions includes directing the pre-separation device to store the plurality of distinct fractions of precursor ions within the plurality of channels. To illustrate, directing the pre-separation device to store the plurality of distinct fractions of precursor ions includes directing the pre-separation device to provide an electrical potential at each channel to selectively halt the flow of precursor ions out of the channels (e.g., to accumulate precursor ions within the channels). Each channel of the plurality of channels may be directed to store a distinct fraction of precursor ions included in the set of distinct fractions of precursor ions.

In alternative examples, directing the pre-separation device to separate precursor ions includes directing the pre-separation device to continuously transport the precursor ions through the pre-separation device without storing the distinct fractions of precursor ions within channels of the pre-separation device. As an illustrative example, the pre-separation device includes a trapped ion mobility separator configured to simultaneously provide a flow of gas in a first direction and a variable electric field gradient in a second direction (e.g., opposite the first direction). By varying the electric field gradient, precursor ions are separated according to mobility. As another illustrative example, the pre-separation device includes a drift ion mobility separator (e.g., including a drift tube and/or SLIM-enabled folded path separator) that is configured to trap and pulse precursor ions for subsequent ion mobility separation along an ion separation path. As will be explained below, each distinct fraction of precursor ions included in the set of distinct fractions of precursor ions exits the pre-separation device at a distinct time according to the ion mobilities of the precursor ions included in the set of distinct fractions of precursor ions.

Alternatively, the physical property of the precursor ions is the m/z of the precursor ions such that the pre-separation device is directed to provide an electric field gradient to each distinct fraction of precursor ions according to m/z of the precursor ions. The pre-separation device may use mass-dependent ejection (e.g., in an axial direction, radial direction, or multiple directions) of precursor ions such that precursor ions within a selected m/z range are ejected from the pre-separation device as a distinct fraction of precursor ions, while precursor ions outside of the selected m/z range are not ejected from the pre-separation device and/or are discarded from the pre-separation device.

The pre-separation device may be directed to vary the electric field gradient to separate precursor ions having various m/z ranges into the set of distinct fractions of precursor ions (e.g., each distinct fraction of precursor ions exiting the pre-separation device has a different m/z range relative to other distinct fractions of precursor ions). For example, the precursor ions having a smaller m/z are separated into one distinct fraction of precursor ions while the precursor ions having a larger m/z are separated into another distinct fraction of precursor ions. Moreover, directing the pre-separation device to separate the precursor ions may include setting or controlling one or more parameters of the electric field gradient (e.g., an amount of the electric field gradient, a direction of the electric field gradient, a type of the electric field gradient, etc.) provided by the pre-separation device. Accordingly, each distinct fraction of precursor ions includes a distinct m/z range of precursor ions such that an m/z range of precursor ions included in one distinct fraction of precursor ions is unique relative to another m/z range of precursor ions included in another distinct fraction of precursor ions (e.g., at least a portion of the m/z range of precursor ions included in one distinct fraction of precursor ions does not overlap with another m/z range of precursor ions included in another distinct fraction of precursor ions).

Method 300 includes, at operation 304, directing the pre-separation device to sequentially transfer a first subset of distinct fractions of precursor ions included in the set of distinct fractions of precursor ions to a mass spectrometer (e.g., mass spectrometer 106). The first subset of distinct fractions includes multiple distinct fractions of precursor ions included in the set of distinct fractions. As an illustrative example, the pre-separation device may separate precursor ions into a set of nine distinct fractions of precursor ions (e.g., n=9). The pre-separation device then sequentially transfers to the mass spectrometer a first subset of precursor ions that includes three of the distinct fractions of precursor ions in the set of distinct fractions such that a first distinct fraction of precursor ions included in the first subset is transferred to the mass spectrometer, a second distinct fraction of precursor ions included in the first subset is transferred to the mass spectrometer after the first distinct fraction is transferred, and a third distinct fraction of precursor ions included in the first subset is transferred to the mass spectrometer after the second distinct fraction is transferred. The process is repeated for each successive subset of distinct fractions of precursor ions.

In instances where the pre-separation device is configured to store the set of distinct fractions of precursor ions within a plurality of channels, directing the pre-separation device to sequentially transfer the first subset of distinct fractions may include directing the pre-separation device to sequentially transfer the first subset of distinct fractions from the plurality of channels. As an illustrative example, directing the pre-separation device to sequentially transfer the first subset of distinct fractions includes directing each channel to provide, at certain controlled times, an electric potential that permits the flow of precursor ions (e.g., to eject precursor ions from the channels). Each channel may be controlled separately such that the pre-separation device may be directed to sequentially emit each distinct fraction included in the first subset of distinct fractions from the plurality of channels, such as one distinct fraction at a time. In other examples, a subset of the plurality of channels can be directed to emit each associated distinct fraction of precursor ions simultaneously, e.g., two or three channels. The subset of the plurality of channels that emit simultaneously can be chosen according to spatial separation between the channels (e.g., channels that are not physically proximate can be directed to emit simultaneously) or according to known or predicted identities of the precursor ions (e.g., channels containing precursor ions of widely varying m/z values can be directed to emit simultaneously).

In instances where the pre-separation device does not store the set of distinct fractions of precursor ions within a plurality of channels, directing the pre-separation device to sequentially transfer the first subset of distinct fractions of precursor ions includes directing the pre-separation device to sequentially transfer the first subset of distinct fractions of precursor ions as the distinct fractions included in the first subset of distinct fractions are continuously transported through the pre-separation device. To illustrate, the smaller precursor ions may migrate more quickly through the pre-separation device than the larger precursor ions such that a distinct fraction of precursor ions including smaller precursor ions is emitted prior to another distinct fraction of precursor ions including larger precursor ions.

In some examples, directing the pre-separation device to sequentially transfer the first subset of distinct fractions of precursor ions further includes directing the pre-separation device to transfer the distinct fractions of precursor ions according to a timing scheme. In some examples, the timing scheme includes transferring precursor ions from the pre-separation device at predetermined intervals (e.g., an initial distinct fraction of precursor ions is emitted from the pre-separation device prior to emitting a next distinct fraction of precursor ions). The predetermined intervals may be based on one or more characteristics of the precursor ions (e.g., a number of distinct fractions of precursor ions, a number of channels of storing the distinct fractions of precursor ions, a number of precursor ions included in each distinct fraction of precursor ions, a duration of accumulating precursor ions within the pre-separation device, etc.) and/or performed periodically (e.g., about every 250 milliseconds (ms), 100 ms, 50 ms, 25 ms, 12 ms etc.).

In some examples, directing the pre-separation device to sequentially transfer the first subset of distinct fractions of precursor ions further includes selecting one or more distinct fractions of precursor ions included in the first subset of distinct fractions of precursor ions. For example, one or more distinct fractions of precursor ions may be selected for multiplexed pre-separation to minimize or prevent overlap of an m/z range of the precursor ions included in the first subset of distinct fractions of precursor ions, which may facilitate mass analysis based on the precursor ions. As an illustrative example, selecting one or more distinct fractions of precursor ions includes selecting one or more distinct fractions of precursor ions in which one or more precursor ions included in the one or more distinct fraction of precursor ions have at least one unique product ion. In instances where selecting a number of distinct fractions of precursor ions having at least one unique product ion is increased, a confidence level associated with detection of the precursor ions and/or a mass analysis based on the precursor ions may also increase. Still other suitable methods may be used to select one or more distinct fractions of precursor ions included in the first subset of distinct fractions of precursor ions.

For example, one or more distinct fractions of precursor ions in which precursor ions have a similar neutral loss (e.g., during the production of product ions) may be selected, which may allow a certain class of compounds to be analyzed. Additionally or alternatively, in instances where the pre-separation device is configured to store the set of distinct fractions of precursor ions within a plurality of channels, selecting one or more distinct fractions of precursor ions may include selecting one or more channels of the pre-separation device to sequentially transfer the one or more distinct fractions of precursor ions stored within the selected one or more channels. Moreover, in instances where at least a portion of the m/z range of the precursor ions included in the selected one or more channels overlap, deconvolution (e.g., by a Hadamard transform) may be used to determine the m/z range associated with each distinct fraction of precursor ions. To illustrate, a sequence of the distinct fractions of precursor ions transferred from the pre-separation device may be encoded and, by alternating selection of distinct fractions of precursor ions transferred from the pre-separation device, precursor ions included in each distinct fraction of precursor ions may be identified.

Method 300 includes, at operation 306, directing the mass spectrometer to sequentially produce product ions from each distinct fraction of precursor ions included in the first subset of distinct fractions of precursor ions as each distinct fraction of precursor ions is transferred from the pre-separation device. As an illustrative example, the mass spectrometer (e.g., by way of collision cell 116) is configured to fragment the precursor ions included in each distinct fraction of precursor ions to generate product ions, such as by applying a collision energy to cause precursor ions to collide with a collision gas (e.g., argon, nitrogen, helium, ammonia, methane, oxygen, hydrogen, etc.). The collision energy and/or a pressure of the collision gas may be adjusted based on the distinct fraction of precursor ions to be fragmented, such as prior to receiving each distinct fraction of precursor ions. In some examples, the mass spectrometer is further configured to isolate (e.g., by way of mass filter 114) one or more precursor ions from each distinct fraction of precursor ions included in the first subset of distinct fractions prior to producing the product ions. Such isolation of the one or more precursor ions from each distinct fraction of precursor ions may allow the m/z range of each distinct fraction of precursor ions to be different and not overlap with the m/z range of another distinct fraction of precursor ions.

Method 300 includes, at operation 308, directing the mass spectrometer to accumulate, in an ion store over an accumulation time, a first population of product ions. The first population of product ions includes the product ions produced from each distinct fraction of precursor ions included in the first subset of distinct fractions of precursor ions. To illustrate, in instances where the first subset of distinct fractions of precursor ions includes three distinct fractions of precursor ions, the first population of product ions includes product ions produced from each of the three distinct fractions of precursor ions included in the first subset of distinct fractions. In some examples, the mass spectrometer (e.g., by way of ion store 118) is configured to accumulate the product ions as the product ions are produced from each distinct fraction. For instance, the mass spectrometer accumulates the first population of product ions as the product ions are sequentially produced from the first distinct fraction of precursor ions, the second distinct fraction of precursor ions, and the third distinct fraction of precursor ions. Accordingly, the first population of product ions includes product ions produced from each of the first, second, and third distinct fractions of precursor ions included in the first subset of distinct fractions.

The mass spectrometer accumulates the first population of product ions over the accumulation time, such as from production of the product ions from the first distinct fraction of precursor ions to until product ions produced from the third distinct fraction of precursor ions are accumulated. The accumulation time may include any suitable time period (e.g., about 250 ms, 150 ms, 100 ms, 50 ms, 36 ms, 12 ms, etc.) and may depend on one or more factors, such as an amount of product ions produced from each distinct fraction of precursor ions and/or a number of distinct fractions included in the first subset of distinct fractions. In some examples, the accumulation time is determined by an ion population control algorithm, such as an automatic gain control (AGC) process. In some examples, the accumulation time is less than an acquisition time for the mass analysis. Such accumulation of product ions within ion store 118 allows product ions produced from multiple distinct fractions of precursor ions to be accumulated in a single population of product ions.

Method 300 includes, at operation 310, directing the mass spectrometer to transfer the first population of product ions to a mass analyzer (e.g., mass analyzer 120) for a mass analysis of the first population of product ions. For example, the mass spectrometer is further configured to acquire a mass spectrum based on the first population of product ions.

Operations 304 to 310 may be performed for one or more additional distinct subsets of fractions of precursor ions in turn. For example, method 300 may further include directing the pre-separation device to sequentially transfer a second subset of distinct fractions of precursor ions to the mass spectrometer after the transfer of the first subset of distinct fractions of precursor ions. The mass spectrometer may be further directed to sequentially produce product ions from each distinct fraction of precursor ions included in the second subset of distinct fractions of precursor ions and accumulate, in an ion store over another accumulation time, a second population of product ions. The second population of product ions includes the product ions produced from each distinct fraction of precursor ions included in the second subset of distinct fractions of precursor ions. The mass spectrometer may further be directed to transfer the second population of product ions from the ion store to a mass analyzer for a mass analysis of the second population of product ions.

The second subset of distinct fractions of precursor ions may be transferred from the pre-separation device to the mass spectrometer simultaneously with the transfer of the first population of product ions to the mass analyzer. Moreover, one or more operating parameters (e.g., collision energy, m/z range, etc.) of the mass spectrometer may be adjusted between the transfer of the first subset of distinct fractions of precursor ions and the transfer of the second subset of distinct fractions of precursor ions to the mass spectrometer such as to target select precursor ions from the second distinct fractions of precursor ions. For example, the targeting the select precursor ions from the second subset of distinct fractions of precursor ions may be based on the mass analysis of the first subset of distinct fractions or precursor ions.

Pre-separation of the precursor ions into subsets of distinct fractions of precursor ions according to a physical property of the precursor ions preserves the precursor ions while the precursor ions are waiting to be transferred to the mass spectrometer for mass analysis. Moreover, multiplexed mass spectra acquisition for precursor ions from multiple distinct fractions of precursor ions allows the detection and/or quantification of several analyte ions without overloading the mass spectrometer, improves the efficiency of the mass analysis, and reduces charge loads of the ion pre-separation, as compared to MS analysis techniques without multiplexed pre-separation. Accordingly, the multiplexed mass spectra acquisition for multiple distinct fractions of precursor ions improves the duty cycle of the MS analysis, as compared with traditional MS analysis techniques.

Other suitable techniques for acquiring mass spectra for populations of accumulated product ions may be used. As an illustrative example, the pre-separation device may be synchronized with the mass spectrometer such that an ion mobility range of the precursor ions in each distinct fraction of precursor ions transferred from the pre-separation device to the mass spectrometer includes precursor ions that are within a precursor m/z range of the mass spectrometer. Moreover, any suitable number of subsets of distinct fractions of precursor ions may be included in the set of distinct fractions of precursor ions, any suitable number of distinct fractions of precursor ions may be included in each subset of distinct fractions of precursor ions, and/or any suitable number of populations of product ions may be accumulated for mass analysis of the set of distinct fractions.

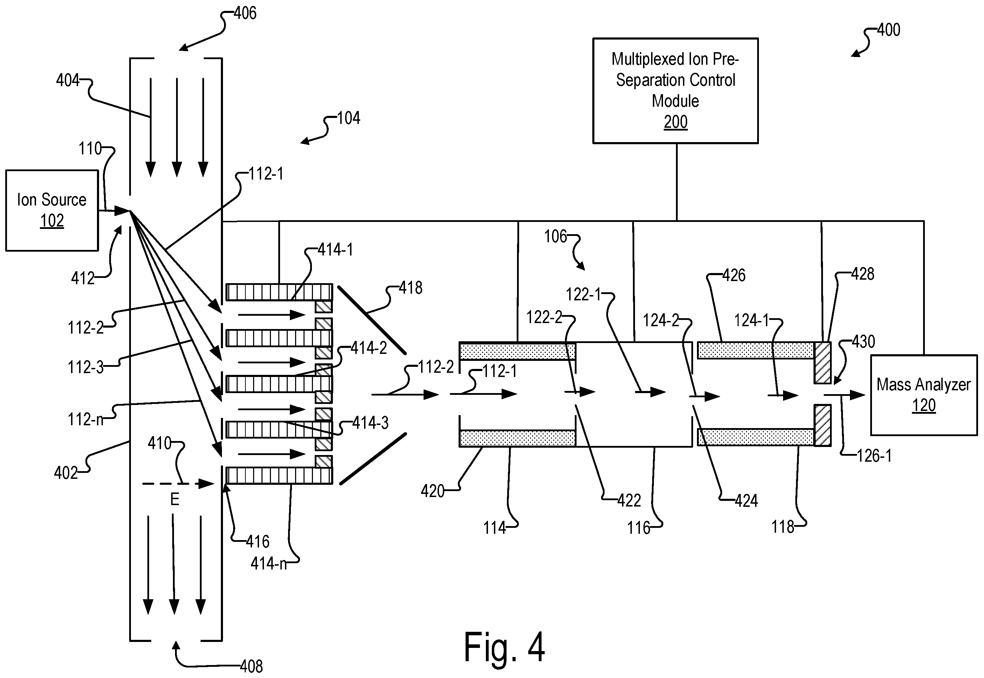

Fig. 4 shows an illustrative implementation 400 of system 100 for performing the method FIG. 3. As shown, pre-separation device 104 is positioned downstream of ion source 102 and is implemented by a differential mobility analyzer including a differential mobility separator. Pre-separation device 104 includes an ion mobility cell 402 having a gas flow region with a gas stream (indicated by arrows 404) flowing in a first direction from a gas inlet 406 at one end of ion mobility cell 402 to a gas outlet 408 at another end (e.g., the opposite end) of ion mobility cell 402. Additionally, an electrical field gradient (indicated by arrow 410) is applied in a second direction. In various examples, the first direction and the second direction can form an angle of between about 0 degrees and about 180 degrees, such as between about 45 degrees and about 135 degrees, such as between about 70 degrees and about 110 degrees. In particular examples, the first direction and the second direction may be substantially orthogonal (at right angles within a small tolerance, e.g., ±5 degrees) to one another. A gas pressure within the ion mobility cell 402 may be between about 1 Torr and about 20 Torr, between about 3 Torr and about 6 Torr, or any other suitable range or value. In various examples, the gas velocity within ion mobility cell 402 may be between about 100 m/s and about 300 m/s, between about 150 m/s and about 200 m/s, or any other suitable range or value.

Ions provided by ion source 102 enter ion mobility cell 402 at an ion entrance 412. Pre-separation device 104 further includes a plurality of ion channels 414 (e.g., channels 414-1 to 414-n) located proximal to a plurality of ion exit orifices 416. In some examples, ion channels 414 and ion exit orifices 416 are arranged in an array along the first direction. For example, ion exit orifices 416 are located opposite of ion entrance 412 in the second direction and are level with and/or offset (downstream) from ion entrance 412 and spaced apart from one another in the first direction. Precursor ions entering ion mobility cell 402 from ion source 102 are separated into a set of distinct fractions 112 of precursor ions (e.g., distinct fractions 112-1 through 112-n, represented by arrows) based on their differential ion mobilities, exit through ion exit orifices 416, and are directed into the array of ion channels 414.

To illustrate, precursor ions flow at substantially the same velocity along the first direction (due to the gas stream) and move in the second direction with differential velocities according to their collisional cross section. Precursor ions with a larger collisional cross section (e.g., precursor ions included in distinct fraction 112-n) move more slowly in the second direction due to a larger number of collisions with the molecules in the gas stream relative to precursor ions with a smaller collisional cross section (e.g., precursor ions included in distinct fraction 112-1). Due to the slower movement in the second direction, precursor ions with the larger collisional cross section move farther along the first direction during their transit through ion mobility cell 402. In this way, precursor ions with successively larger collisional cross section are sorted into distinct fractions 112 in the array of ion channels 414, such that precursor ions included in a distinct fraction 112 of precursor ions in an ion channel have a different range of ion mobilities from precursor ions included in another distinct fraction 112 of precursor ions in an adjacent ion channel. For example, a first distinct fraction 112-1 of precursor ions having a first range of ion mobilities is separated into a first channel 414-1, a second distinct fraction 112-2 of precursor ions having a second range of ion mobilities is separated into a second channel 414-2, a third distinct fraction 112-3 of precursor ions having a third range of ion mobilities is separated into a third channel 414-3, and so on.

In various examples, ion channels 414 are implemented by one or more ion traps, RF ion guides, DC ion lenses, or a combination thereof. In some examples, ion channels 414 include ion traps each defined by a plurality of rod electrodes (e.g., a quadrupole). Additionally, each ion trap may include one or more drag vanes. In certain examples, adjacent ion traps in the array of ion traps share a pair of rod electrodes.

In various examples, the plurality of ion channels 414 include between about 3 ion channels and about 50 ion channels, between about 5 ion channels and about 20 ion channels, between about 7 ion channels and about 15 ion channels, or any other suitable number of ion channels. Ion channels 414 are shown as linear channels arranged in a linear array. In other examples, ion channels 414 may have any other suitable geometry (e.g., curved, bent, non-linear, etc.) and/or orientations, and the arrangement of the plurality of ion channels may have any suitable configuration, such as an annular array or a curved array.

In various examples, a lens array (not shown) may be positioned between ion exit orifices 416 and ion channels 414. The lens array may be configured to guide distinct fractions 112 of precursor ions into the respective ion channel 414, such as by focusing distinct fractions 112 of precursor ions towards the centerline of the ion channel 414.

Control module 200 may be configured to direct pre-separation device 104 to spatially separate precursor ions received from ion source 102 into the set of distinct fractions 112 of precursor ions, such as by directing pre-separation device 104 to receive precursor ions from ion source 102, provide the gas stream, and/or provide the electric field gradient within ion mobility cell 402 of pre-separation device 104. Moreover, control module 200 may direct pre-separation device 104 to spatially separate the precursor ions by setting one or more parameters of the gas stream (e.g., a speed of the flow of gas, a type of gas, a direction of the flow of gas, etc.) and/or the electric field gradient (e.g., an amount of the electric field gradient, a direction of the electric field gradient, a type of the electric field gradient, etc.) of pre-separation device 104.

In the example in FIG. 4, pre-separation device 104 is configured to sequentially transfer distinct fractions 112 of precursor ions included in a subset of distinct fractions 112 from channels 414 (e.g., in response to control signals received from control module 200). To illustrate, control module 200 is configured to direct, at certain times, channels 414 of pre-separation device 104 to provide an electrical potential to halt the flow of precursor ions within channels 414 and to direct, at certain other times, one or more select channels 414 of pre-separation device 104 to provide an electrical potential (e.g., a reduced electrical potential) to allow the flow of precursor ions from the one or more select channels 414. The one or more select channels 414 are controlled to sequentially emit distinct fractions 112 of precursor ions included in a subset of distinct fractions 112. For example, a first subset of distinct fractions 112 of precursor ions may include a first distinct fraction 112-1 and a second distinct fraction 112-2 such that the first distinct fraction 112-1 of precursor ions is emitted from first channel 414-1 and the second distinct fraction 112-2 of precursor ions is emitted from second channel 414-2 (e.g., after first distinct fraction 112-1 of precursor ions has been emitted). Such sequential transfer of distinct fractions 112 of precursor ions are transferred from pre-separation device 104 until a desired number of subsets of distinct fractions 112 of precursor ions have been emitted from pre-separation device 104. Channels 414 may be sequentially controlled in any order to allow the flow of precursor ions (e.g., to emit distinct fractions 112 of precursor ions in any sequence). In some examples, channels 414 are controlled to sequentially emit distinct fractions 112 of precursor ions in order of increasing (or decreasing) ion mobilities.

Ion optics 418 (e.g., a cooling/transfer guide) is located adjacent to the plurality of ion channels 414 between pre-separation device 104 and mass spectrometer 106. Ion optics 418 are configured to guide distinct fractions 112 of precursor ions emitted from pre-separation device 104 to mass spectrometer 106. For example, ion optics 418 may direct precursor ions included in each distinct fraction 112 of precursor ions emitted from pre-separation device 104 towards a central axis of mass filter 114 of mass spectrometer 106. In the example of FIG. 4, ion optics 420 are depicted as a funnel. However, a funnel is merely optional, as any one or more additional and/or alternative devices and/or ion optics may be used to guide ions from ion channels 414 to mass spectrometer 106.

Mass filter 114 of mass spectrometer 106 is positioned downstream of pre-separation device 104 and collector funnel 418 such that mass filter 114 is configured to receive each distinct fraction 112 of precursor ions included in a subset of distinct fractions 112 as distinct fractions 112 of precursor ions are sequentially transferred from ion channels 414. For each distinct fraction 112 of precursor ions included in the subset of distinct fractions 112, mass filter 114 isolates precursor ions of a selected m/z range (e.g., an m/z range of an isolation window) and transfers the isolated precursor ions as packets 122 of precursor ions. To illustrate, mass filter 114 receives first distinct fraction 112-1, isolates one or more precursor ions included in first distinct fraction 112-1 based on m/z, and transfers the isolated one or more precursor ions as a first packet 122-1 of precursor ions from mass filter 114 to collision cell 116. After isolating precursor ions included in first packet 122-1 and transferring first packet 122-1 to collision cell 116, mass filter 114 receives second distinct fraction 112-2 included in the first subset of distinct fractions 112 from pre-separation device 104, isolates one or more precursor ions included in second distinct fraction 112-2 based on m/z, and transfers the isolated one or more precursor ions as a second packet 122-2 of precursor ions from mass filter 114 to collision cell 116.

As shown, mass filter 114 is an m/z separator that includes a linear ion trap defined by a plurality of rod electrodes 420 (e.g., a quadrupole, a hexapole, an octupole, etc.). In some examples, rod electrodes 420 are configured to provide an electric field gradient (e.g., an RF-field pseudopotential) that is m/z dependent such that precursor ions within an m/z range that are stable within the electric field gradient accumulate within mass filter 114 as a packet 122 of precursor ions, while precursor ions outside of the m/z range that are unstable within the electric field gradient do not accumulate within mass filter 114 and/or are discarded from mass filter 114. In the illustrated example, rod electrodes 420 of mass filter 114 are configured to provide the electric field gradient in response to control signals received from control module 200. Moreover, control module 200 may set or control one or more parameters of the electric field gradient (e.g., an amount of the electric field gradient, a direction of the electric field gradient, a type of the electric field gradient, etc.) provided by mass filter 114.

The electric field gradient provided by rod electrodes 420 may be varied for each distinct fraction 112 of precursor ions such that precursor ions having various m/z ranges are sequentially emitted from mass filter 114 as packets 122 of precursor ions (e.g., each distinct packet 122 of precursor ions has a different m/z range relative to other packets 122 of precursor ions). As an illustrative example, the electric field gradient provided by rod electrodes 420 is tailored for each distinct fraction 112 of precursor ions, such as to order packets 122 of precursor ions in an m/z dependent manner (e.g., in the order of increasing or decreasing m/z values).

Mass filter 114 includes an aperture 422 through which, for each distinct fraction 112 of precursor ions included in the subset of distinct fractions 112, a packet 122 of precursor ions is transferred from mass filter 114 to collision cell 116. For example, mass filter 114 transfers the first packet 122-1 of precursor ions isolated from the first distinct fraction 112-1 to collision cell 116 and then transfers the second packet 122-2 of precursor ions isolated from the second distinct fraction 112-2 to collision cell 116. Collision cell 116 is configured to fragment the precursor ions included in each packet 122 of precursor ions to generate, for each packet 122 of precursor ions, a packet 124 of product ions. For example, collision cell 116 fragments precursor ions included in the first packet 122-1 of precursor ions to produce a first packet 124-1 of product ions and then fragments precursor ions included in the second packet 122-2 of precursor ions to produce a second packet 124-2 of product ions.

Collision cell 116 uses collision induced dissociation to fragment precursor ions by applying a collision energy to cause precursor ions to collide with a collision gas. In some examples, the collision energy may be applied from about 5 Volts (V) to about 50V, from about 5V to about 25V, or any other suitable range or value. The collision gas may have a gas pressure of about 0.1 mTorr to about 10 mTorr, or any other suitable range or value. In the illustrated example, collision cell 116 is configured to provide the collision energy in response to control signals received from control module 200. Moreover, control module 200 may set or control one or more parameters of the collision energy (e.g., an amount of the collision energy, a direction of the collision energy, a type of the collision energy, etc.) provided by collision cell 116. To illustrate, the collision energy may be adjusted for each packet 122 of precursor ions received from mass filter 114 to produce packets 124 of product ions (e.g., the collision energy may be adjusted before receiving first packet 122-1 of precursor ions and/or before receiving second packet 122-2 of precursor ions).

Collision cell 116 includes an aperture 424 through which, for each distinct fraction 112 of precursor ions included in a subset of distinct fractions 112, a packet 124 of product ions is transferred from collision cell 116 to ion store 118. As shown, ion store 118 includes a linear ion trap defined by a plurality of rod electrodes 426 (e.g., a quadrupole, a hexapole, an octupole, etc.) and an end electrode 428 positioned at a downstream end of rod electrodes 426 such that ion store 118 is configured to accumulate, over an accumulation time, product ions included in packets 124 of product ions produced from each distinct fraction 112 of precursor ions included in the subset of distinct fractions 112. For example, ion store 118 accumulates first packet 124-1 of product ions and the second packet 124-2 of product ions within ion store 118 over the accumulation time to accumulate a first population 126-1 of product ions.

In some examples, rod electrodes 426 are configured to provide an electric field gradient (e.g., an RF-field pseudopotential) such that product ions within an m/z range that are stable within the electric field gradient accumulate within ion store 118 as a population 126 of product ions produced from each distinct fraction 112 of precursor ions included in the subset of distinct fractions 112. In the illustrated example, rod electrodes 426 of ion store 118 are configured to provide the electric field gradient in response to control signals received from control module 200. Moreover, control module 200 may set or control one or more parameters of the electric field gradient (e.g., an amount of the electric field gradient, a direction of the electric field gradient, a type of the electric field gradient, etc.) provided by ion store 118. The product ions are accumulated within ion store 118 over an accumulation time (e.g., until all packets 124 of product ions produced from the subset of distinct fractions 112 of precursor ions are accumulated).

End electrode 428 of ion store 118 includes an aperture 430 through which first population 126-1 of product ions are transferred from ion store 118 to mass analyzer 120. For example, end electrode 428 is configured to provide a blocking potential (e.g., a DC blocking potential) configured to halt, at certain times, the flow of product ions within ion store 118 (e.g., during the accumulation time to accumulate first population 126-1 of product ions) and to allow, at certain other times, the flow of product ions through aperture 430 (e.g., the blocking potential may be reduced at certain times to allow first population 126-1 of product ions to flow through aperture 430). In the illustrated example, end electrode 428 is configured to provide the blocking potential in response to control signals received from control module 200. Moreover, control module 200 may control one or more parameters of the blocking potential (e.g., an amount of the blocking potential, a direction of the blocking potential, a type of the blocking potential, etc.) provided by ion store 118.

Mass analyzer 120 is positioned downstream of ion store 118 and is configured to receive first population 126-1 of product ions transferred from ion store 118 and acquire a mass spectrum based on first population 126-1 of product ions. For example, mass analyzer 120 generates a signal based on product ions included in first population 126-1 of product ions having a variety of different m/z. The signal may include an electrical signal representative of ion intensities based on the product ions included in first population 126-1 of product ions. In some examples, control module 200 may be configured to direct mass analyzer 120 to generate the signal and/or may obtain the signal generated by mass analyzer 120.

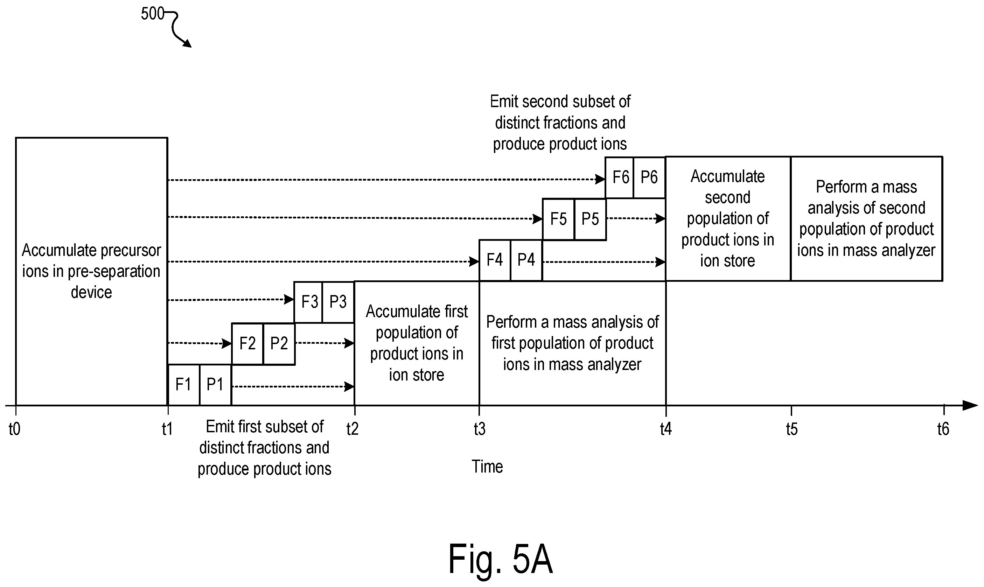

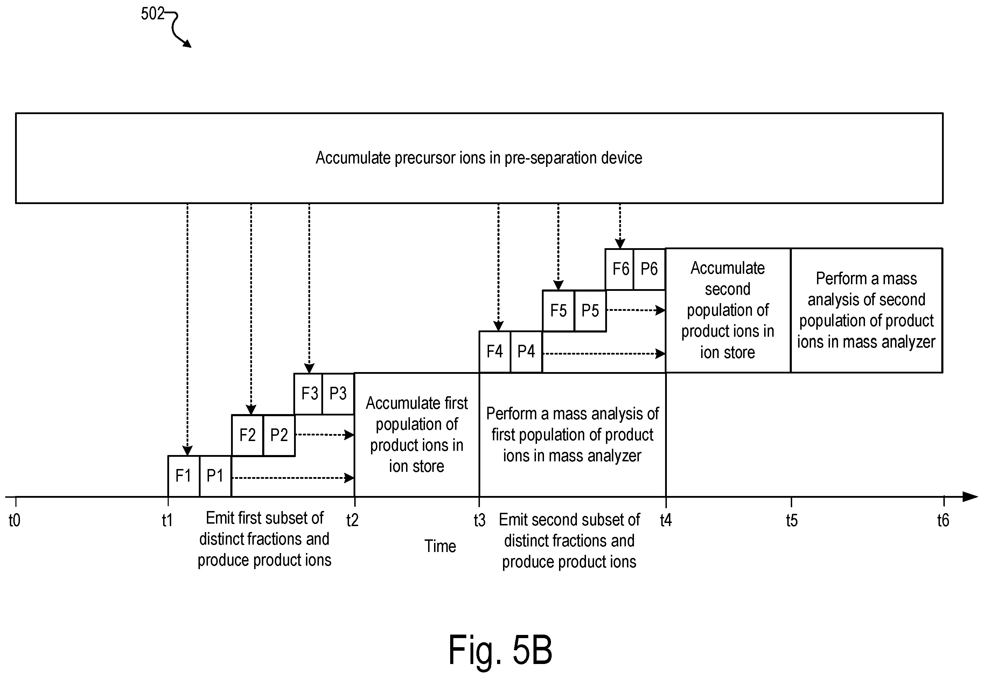

Pre-separation device 104 may be configured to transfer distinct fractions 112 of precursor ions and/or ion store 118 may be configured to emit populations 126 of product ions according to a timing scheme. FIGS. 5A and 5B show schematics of illustrative timing schemes 500 and 502, respectively. Each timing scheme 500 and 502 includes transferring an initial subset of distinct fractions 112 of precursor ions from pre-separation device 104 to mass filter 114, accumulating in an ion store a population 126 of product ions produced from the initial subset of distinct fractions 112 of precursor ions, and transferring population 126 of product ions from ion store 118 simultaneously with the transfer of a next subset of distinct fractions 112 of precursor ions from pre-separation device 104 to mass filter 114.

As shown in FIG. 5A, pre-separation device 104 is configured to accumulate precursor ions (e.g., within channels 414) over a first time period (e.g., from time t0 to time t1) of timing scheme 500. Pre-separation device 104 then sequentially transfers to mass filter 114 distinct fractions 112 of precursor ions (e.g., distinct fractions F1 through F3) included in a first subset of the accumulated distinct fractions 112 of precursor ions (e.g., the subset including distinct fractions F1 through F3), and collision cell 116 fragments the precursor ions included in the first subset of distinct fractions into packets 124 of product ions (e.g., packets P1 through P3, such that packet P1 is produced from distinct fraction F1, packet P2 is then produced from distinct fraction F2, and packet P3 is then produced from distinct fraction F3) over a second time period (e.g., from time t1 to time t2) of timing scheme 500. As shown in FIG. 5B, pre-separation device 104 is alternatively configured to continuously accumulate precursor ions (e.g., within channels 414) during and after the first time period, such as while pre-separation device sequentially transfers distinct fractions 112 of precursor ions. To illustrate, pre-separation device 104 may accumulate precursor ions included in distinct fraction F2 while pre-separation device transfers precursor ions included in distinct fraction F1, and/or pre-separation device 104 may accumulate precursor ions included in distinct fraction F3 while pre-separation device transfers precursor ions included in distinct fraction F2. Pre-separation device 104 may be configured to accumulate precursor ions continuously and/or periodically through timing scheme 502.

Ion store 118 accumulates a first population 126-1 of product ions (e.g., product ions included in packets P1 through P3) over a third time period (an accumulation time, e.g., from time t2 to time t3) of timing schemes 500 and 502. In some examples, the third time period may overlap with the second time period such that ion store 118 accumulates the first population 126-1 of product ions as the product ions are produced by collision cell 116. In some other examples, each packet (e.g., packets P1 through P3) included in the first population 126-1 of product ions are transferred to ion store 118 simultaneously (e.g., after the last packet of product ions included in the first population 126-1 of product ions is produced). Ion store 118 transfers the first population 126-1 of product ions to mass analyzer 120 and mass analyzer 120 performs a mass analysis of the first population 126-1 of product ions over a fourth time period (e.g., from time t3 to time t4) of timing schemes 500 and 502.

Simultaneously with the mass analysis of the first population 126-1 of product ions over the fourth time period, pre-separation device 104 sequentially transfers distinct fractions 112 of precursor ions (e.g., distinct fractions F4 through F6) included in a second subset of the accumulated distinct fractions 112 of precursor ions (e.g., the subset including distinct fractions F4 through F6), and collision cell 116 fragments the precursor ions included in the second subset of distinct fractions into packets 124 of product ions (e.g., packets P4 through P6, such that packet P4 is produced from distinct fraction F4, packet P5 is then produced from distinct fraction F5, and packet P6 is then produced from distinct fraction F6) over the fourth time period (e.g., from time t3 to time t4). Ion store 118 accumulates a second population 126-2 of product ions (e.g., product ions included in packets P4 through P6) over a fifth time period (an accumulation time, e.g., from time t4 to time t5) of timing scheme 500. In some examples, the fifth time period may overlap with the fourth time period such that ion store 118 accumulates the second population 126-2 of product ions as the product ions are produced by collision cell 116. In some other examples, each packet (e.g., packets P4 through P6) included in the second population 126-2 of product ions are transferred to ion store 118 simultaneously (e.g., after the last packet of product ions included in the second population 126-2 of product ions is produced). Ion store 118 transfers the second population 126-2 of product ions to mass analyzer 120 and mass analyzer 120 performs a mass analysis of the second population 126-2 of product ions over a sixth time period (e.g., from time t5 to time t6) of timing schemes 500 and 502. Pre-separation device 104 may continue to sequentially emit subsets of distinct fractions 112 of precursor ions until each distinct fraction 112 of precursor ions has been emitted from each channel 414.

As an illustrative example, pre-separation device 104 may include 9 channels 414 (e.g., n = 9) such that pre-separation device 104 accumulates a set of distinct fractions 112 of precursor ions within the 9 channels 414 during the first time period (e.g., about 250 ms). The set of 9 distinct fractions 112 includes 3 subsets of distinct fractions 112 of precursor ions such that each subset of distinct fractions 112 includes 3 distinct fractions 112. Each subset of the 3 distinct fractions 112 of precursor ions are sequentially transferred from pre-separation device 104 for mass analysis over the remaining time periods (e.g., about 36 ms, such as about 12 ms per subset of distinct fractions 112).

Prior to transferring a first distinct fraction 112-1 of precursor ions included in the first subset of distinct fractions 112 from pre-separation device 104, one or more operating parameters of mass filter 114 and/or collision cell 116 may be adjusted (e.g., over a time period of about 1-2 ms) to correspond to the precursor ions included in the first distinct fraction 112-1. The first distinct fraction 112-1 is transferred from first channel 414-1 of pre-separation device 104 to mass filter 114, collision cell 116, and ion store 118 (e.g., over a time period of about 2-3 ms). The one or more operating parameters of mass filter 114 and/or collision cell 116 may further be adjusted to correspond to the precursor ions included in a second distinct fraction 112-2 (e.g., over a time period of about 1-2 ms). The second distinct fraction 112-2 is transferred from second channel 414-2 of pre-separation device 104 to mass filter 114, collision cell 116, and ion store 118 (e.g., over a time period of about 2-3 ms). The one or more operating parameters of mass filter 114 and/or collision cell 116 may further be adjusted to correspond to the precursor ions included in the third distinct fraction 112-3 (e.g., over a time period of about 1-2 ms) and the third distinct fraction 112-3 is transferred from third channel 414-3 of pre-separation device 104 to mass filter 114, collision cell 116, and ion store 118 (e.g., over a time period of about 2-3 ms). Ion store 118 accumulates, over an accumulation time, the first population 126-1 of product ions produced from the precursor ions included in the first distinct fraction 112-1, second distinct fraction 112-2, and third distinct fraction 112-3 and transfers the first population 126-1 to mass analyzer 120 for mass analysis of the first population 126-1. After the first population 126-1 is transferred from ion store 118, the process is repeated for the second and third subsets of distinct fractions 112. While the illustrated example includes 9 channels 414, 9 distinct fractions 112 of precursor ions, and 3 distinct fractions 112 in each subset of distinct fractions, any suitable number of channels 414, distinct fractions 112, and subsets of distinct fractions 112 may be used for the multiplexed separation, as well as any suitable length of time periods.

Such a pre-separation of precursor ions according to timing schemes 500 and 502 improves the duty cycle for mass analysis. For example, accumulating and pre-separating the precursor ions into distinct fractions 112 of precursor ions according to mobility in pre-separation device 104 during the first time period preserves the precursor ions while the precursor ions are waiting to be transferred to mass spectrometer 106 for mass analysis. Moreover, accumulating and analyzing product ions produced from precursor ions included in subsets of distinct fractions 112 during the remaining periods allows mass spectrometer 106 to analyze the product ions produced from each of the subsets of distinct fractions 112 simultaneously without overloading mass spectrometer 106. The pre-separation based on mobility may further decrease the charge loads that would otherwise hinder m/z-based separation, provide a separation of charged states of interfering ions, and increase the efficiency of the m/z-based separation.

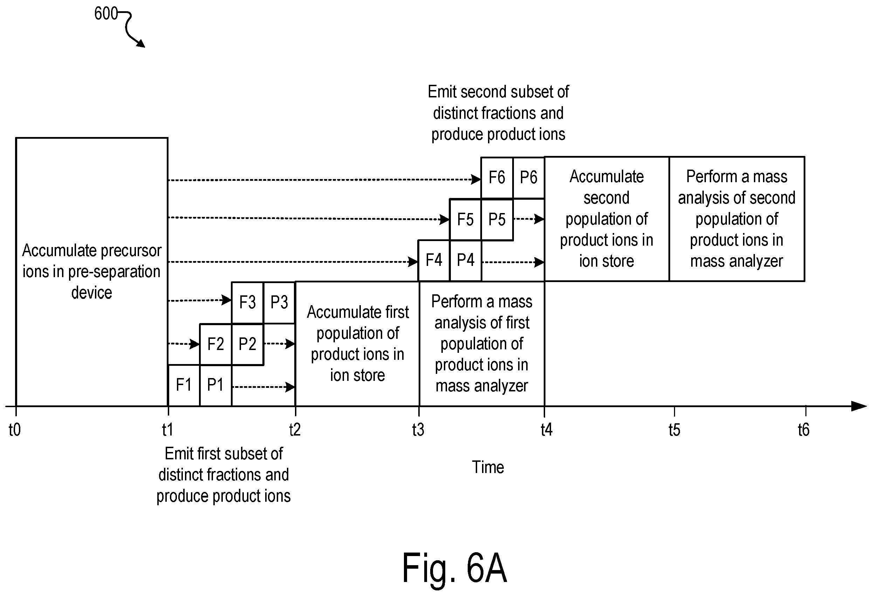

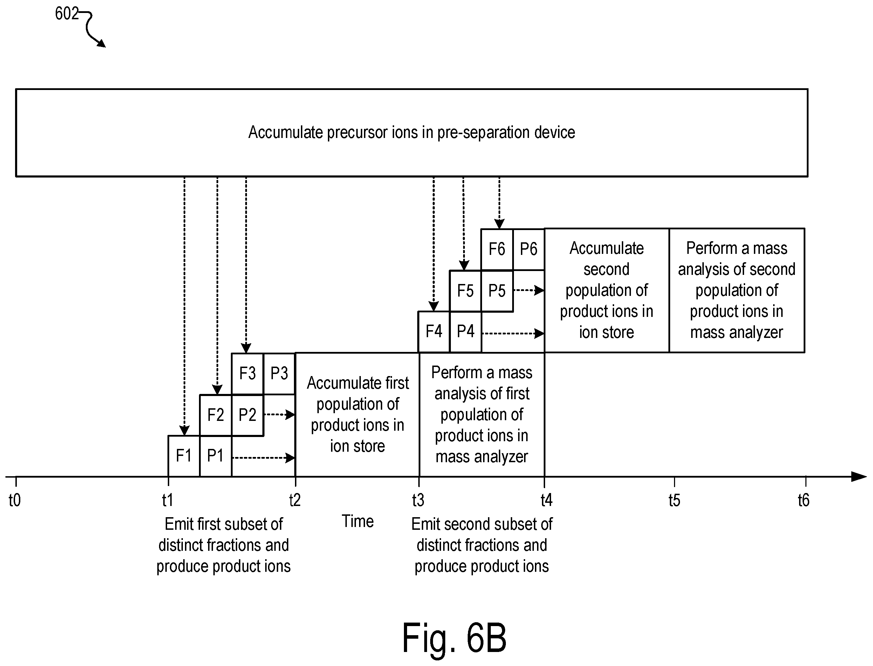

Other suitable timing schemes may be used. FIGS. 6A and 6B show schematics of other illustrative timing schemes 600 and 602, respectively. Each timing scheme 600 and 602 includes emitting an initial distinct fraction 112 of precursor ions from pre-separation device 104 and emitting a next distinct fraction 112 of precursor ions from pre-separation device 104 simultaneously with producing product ions from the initial distinct fraction 112 of precursor ions.

As shown in FIG. 6A, pre-separation device 104 accumulates precursor ions (e.g., within channels 414) over a first time period (e.g., from time t0 to time t1) of timing scheme 600. Pre-separation device 104 then sequentially transfers, to mass filter 114 and collision cell 116, distinct fractions 112 of precursor ions (e.g., distinct fractions F1 through F3) included in a first subset of the accumulated distinct fractions 112 of precursor ions over a second time period (e.g., from time t1 to time t2) of timing scheme 600. For example, a first distinct fraction F1 is transferred from first channel 414-1 and a first packet P1 of product ions is produced (e.g., by way of collision cell 116) from the first distinct fraction F1. While the first packet P1 of product ions is produced and/or transferred from collision cell 116, pre-separation device 104 transfers a second distinct fraction F2 from second channel 414-2 such that a second packet P2 of product ions is produced from the second distinct fraction F2. After that, while the second packet P2 of product ions is produced and/or transferred from collision cell 116, pre-separation device 104 transfers a third distinct fraction F3 from third channel 414-3 such that a third packet P3 of product ions is produced in collision cell 116 from the third distinct fraction F3.

As shown in FIG. 6B, pre-separation device 104 is alternatively configured to continuously accumulate precursor ions (e.g., within channels 414) during and after the first time period, such as while pre-separation device 104 sequentially transfers distinct fractions 112 of precursor ions. To illustrate, pre-separation device 104 may accumulate precursor ions included in distinct fraction F2 while pre-separation device transfers precursor ions included in distinct fraction F1, and/or pre-separation device 104 may accumulate precursor ions included in distinct fraction F3 while pre-separation device transfers precursor ions included in distinct fraction F2. Pre-separation device 104 may be configured to accumulate precursor ions continuously and/or periodically through timing scheme 602.

Ion store 118 accumulates a first population 126-1 of product ions (e.g., product ions included in packets P1 through P3) over a third time period (e.g., from time t2 to time t3) of timing schemes 600 and 602. In some examples, the third time period may overlap with the second time period such that ion store 118 accumulates the first population 126-1 of product ions as the product ions are produced by collision cell 116. In some other examples, each packet (e.g., packets P1 through P3) included in the first population 126-1 of product ions are transferred to ion store 118 simultaneously (e.g., after the last packet of product ions included in the first population 126-1 of product ions is produced). Ion store 118 then transfers the first population 126-1 of product ions to mass analyzer 120, and mass analyzer 120 performs a mass analysis of the first population 126-1 of product ions over a fourth time period (e.g., from time t3 to time t4) of timing schemes 600 and 602.

Simultaneously with the mass analysis of the first population 126-1 of product ions over the fourth time period, pre-separation device 104 sequentially transfers, to mass filter 114 and collision cell 116, distinct fractions 112 of precursor ions (e.g., distinct fractions F4 through F6) included in a second subset of the accumulated distinct fractions 112 of precursor ions (e.g., distinct fraction F4 from fourth channel 414-4, then distinct fraction F5 from fifth channel 414-5, and then distinct fraction F6 from sixth channel 414-6), and collision cell 116 fragments the precursor ions included in the second subset into packets 124 of product ions (e.g., packet P4 from distinct fraction F4, then packet P5 from distinct fraction F5, and then packet P6 from distinct fraction F6) over the fourth time period. For example, subsequent fractions of precursor ions are transferred from pre-separation device 104 after producing, in collision cell 116, product ions from previous fractions of precursor ions. Ion store 118 accumulates a second population 126-2 of product ions (e.g., product ions included in packets P4 through P6) over a fifth time period (e.g., from time t4 to time t5) of timing scheme 600. In some examples, the fifth time period may overlap with the fourth time period such that ion store 118 accumulates the second population 126-2 of product ions as the product ions are produced by collision cell 116. In some other examples, each packet (e.g., packets P4 through P6) included in the second population 126-2 of product ions are transferred to ion store 118 simultaneously (e.g., after the last packet of product ions included in the second population 126-2 of product ions is produced). Ion store 118 transfers the second population 126-2 of product ions to mass analyzer 120 and mass analyzer 120 performs a mass analysis of the second population 126-2 of product ions over a sixth time period (e.g., from time t5 to time t6) of timing scheme 600. Pre-separation device 104 may continue to sequentially emit subsets of distinct fractions 112 of precursor ions until each distinct fraction 112 of precursor ions has been emitted from each channel 414. Such transfer of distinct fractions 112 of precursor ions while product ions are being produced further reduces the amount of time for mass analysis of the set of distinct fractions 112.

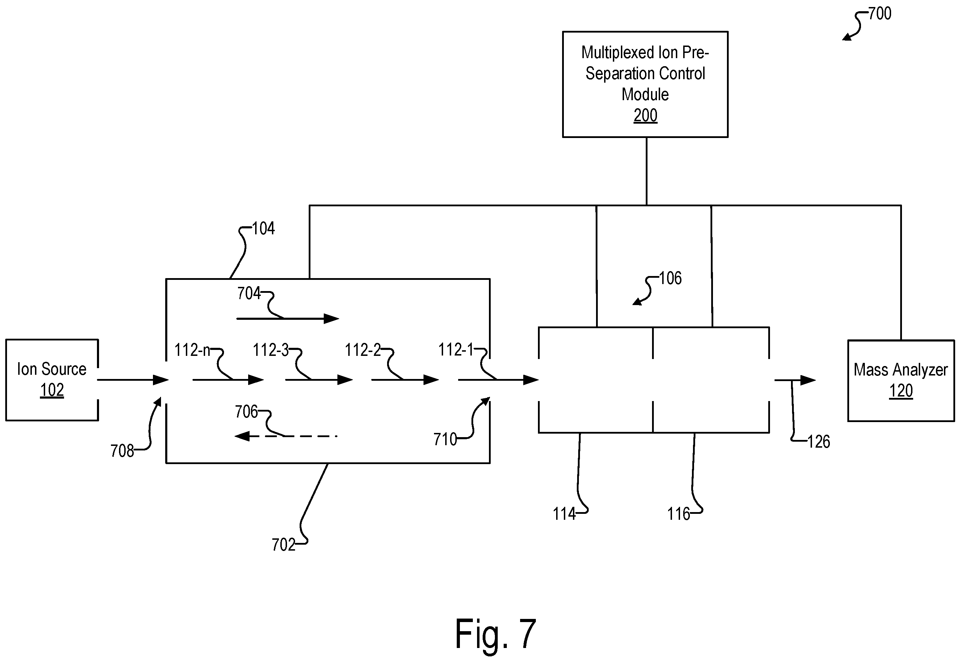

FIG. 7 shows another illustrative implementation 700 of system 100 in which precursor ions are continuously transported through pre-separation device 104 and mass spectrometer 106. As shown, pre-separation device 104 is positioned downstream of ion source 102 and includes a trapped ion mobility separator wherein precursor ions are spatially separated, within a separation region 702 of pre-separation device 104, based on a simultaneous acting flow of gas (shown by arrow 704) and a variable electric field gradient (shown by arrow 706) within separation region 702. The flow of gas is in a first direction from an inlet 708 at one end of separation region 702 to an outlet 710 at another end (e.g., the opposite end) of separation region 702. Additionally, the electrical field gradient is applied in a second direction (e.g., a direction opposite the first direction). Accordingly, the flow of gas transports precursor ions in the first direction against the second direction of the electric field gradient to spatially separate the precursor ions according to mobility of the precursor ions. The electric field gradient is varied to sequentially transfer, over time, distinct fractions 112 of precursor ions to mass spectrometer 106. To illustrate, the electric field gradient is steadily decreased to sequentially transfer distinct fractions 112 of precursor ions with increasing mobility. As shown, distinct fractions 112 of precursor ions are continually transferred from pre-separation device 104. Alternatively, the electric field gradient may be stepped such that distinct fractions 112 of precursor ions are transferred from pre-separation device 104 in a stepwise fashion. In some examples, distinct fractions 112 of precursor ions may be directed to different locations (e.g., in a DMA separator based on time of arrival).

Mass filter 114 of mass spectrometer 106 is positioned downstream of pre-separation device 104 such that mass filter 114 is configured to receive distinct fractions 112 of precursor ions (e.g., through outlet 710). For each distinct fraction 112 of precursor ions, mass filter 114 isolates precursor ions of a selected m/z range (e.g., an m/z range of an isolation window) of precursor ions. Mass filter 114 transfers the isolated precursor ions for each distinct fraction 112 of precursor ions to collision cell 116. Collision cell 116 fragments the isolated precursor ions received from mass filter 114 into product ions. For example, collision cell 116 uses collision induced dissociation to fragment precursor ions by applying a collision energy to cause precursor ions to collide with a collision gas. One or more operating parameters of mass filter 114 and/or collision cell 116 may be adjusted prior to receiving each distinct fraction 112 of precursor ions, such as for isolating, fragmenting, and/or accumulating ions within each distinct fraction 112.

In the illustrated example, collision cell 116 comprises an ion store (e.g., ion store 118) such that collision cell 116 is configured to accumulate a population 126 of product ions produced from each subset of distinct fractions 112 of precursor ions within collision cell 116. The product ions are accumulated within collision cell 116 over an accumulation time (e.g., until product ions are produced from each distinct fraction of precursor ions included in the subset of distinct fractions 112). Collision cell 116 then transfers the population 126 of product ions to mass analyzer 120 for mass analysis. For example, collision cell 116 may include an end electrode configured to provide a blocking potential (e.g., a DC blocking potential) configured to halt, at certain times, the flow of product ions within collision cell 116 (e.g., during the accumulation time) and to allow, at certain other times, the flow of product ions from collision cell 116 (e.g., the blocking potential may be reduced at certain times to allow the population 126 of product ions to flow).

Mass analyzer 120 of mass spectrometer 106 is positioned downstream of collision cell 116 and is configured to receive the population 126 of product ions transferred from collision cell 116 and acquire a mass spectrum for the population 126 of product ions. For example, mass analyzer 120 generates a signal based on product ions produced from precursor ions included within each distinct fraction 112 of precursor ions transferred from pre-separation device 104 as a subset of distinct fractions 112. The signal may include an electrical signal representative of ion intensities based on the product ions included within population 126 of product ions. In some examples, control module 200 may be configured to direct mass analyzer 120 to generate the signal and/or may obtain the signal generated by mass analyzer 120. Mass analyzer 120 may further generate mass spectrum for additional populations 126 of product ions accumulated within collision cell 116 produced from additional subsets of distinct fractions 112 of precursor ions transferred from pre-separation device 104.

The systems and methods described herein may be applied to other types of instruments for multiplexed pre-separation. For example, pre-separation device 104 may implement any suitable technique for spatially separating precursor ions according to mobility, such as DMA separation, drift ion mobility separation, traveling wave ion mobility separation, and trapped ion mobility separation. Additionally or alternatively, pre-separation device 104 may implement any suitable technique for separating precursor ions based on m/z, such as an RF stacked ring ion guide, and a separation based on competition of pseudopotential resulting from a moving wave and a DC gradient. Such systems and techniques may be used for DDA and/or DIA MS analysis.

In certain embodiments, one or more of the systems, components, and/or processes described herein may be implemented and/or performed by one or more appropriately configured computing devices. To this end, one or more of the systems and/or components described above may include or be implemented by any computer hardware and/or computer-implemented instructions (e.g., software) embodied on at least one non-transitory computer-readable medium configured to perform one or more of the processes described herein. In particular, system components may be implemented on one physical computing device or may be implemented on more than one physical computing device. Accordingly, system components may include any number of computing devices, and may employ any of a number of computer operating systems.

In certain embodiments, one or more of the processes described herein may be implemented at least in part as instructions embodied in a non-transitory computer-readable medium and executable by one or more computing devices. In general, a processor (e.g., a microprocessor) receives instructions, from a non-transitory computer-readable medium, (e.g., a memory, etc.), and executes those instructions, thereby performing one or more processes, including one or more of the processes described herein. Such instructions may be stored and/or transmitted using any of a variety of known computer-readable media.

A computer-readable medium (also referred to as a processor-readable medium) includes any non-transitory medium that participates in providing data (e.g., instructions) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random-access memory ("DRAM"), which typically constitutes a main memory. Common forms of computer-readable media include, for example, a disk, hard disk, magnetic tape, any other magnetic medium, a compact disc read-only memory ("CD-ROM"), a digital video disc ("DVD"), any other optical medium, random access memory ("RAM"), programmable read-only memory ("PROM"), electrically erasable programmable read-only memory ("EPROM"), FLASH-EEPROM, any other memory chip or cartridge, or any other tangible medium from which a computer can read.

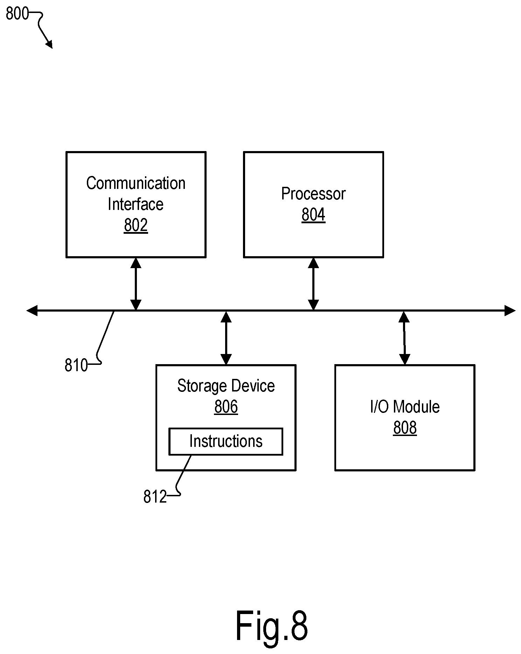

FIG. 8 shows an illustrative computing device 800 that may be specifically configured to perform one or more of the processes described herein. As shown in FIG. 8, computing device 800 may include a communication interface 802, a processor 804, a storage device 806, and an input/output ("I/O") module 808 communicatively connected one to another via a communication infrastructure 810. While an illustrative computing device 800 is shown in FIG. 8, the components illustrated in FIG. 8 are not intended to be limiting. Additional or alternative components may be used in other embodiments. Components of computing device 800 shown in FIG. 8 will now be described in additional detail.

Communication interface 802 may be configured to communicate with one or more computing devices. Examples of communication interface 802 include, without limitation, a wired network interface (such as a network interface card), a wireless network interface (such as a wireless network interface card), a modem, an audio/video connection, and any other suitable interface.

Processor 804 generally represents any type or form of processing unit capable of processing data and/or interpreting, executing, and/or directing execution of one or more of the instructions, processes, and/or operations described herein. Processor 804 may perform operations by executing computer-executable instructions 812 (e.g., an application, software, code, and/or other executable data instance) stored in storage device 806.

Storage device 806 may include one or more data storage media, devices, or configurations and may employ any type, form, and combination of data storage media and/or device. For example, storage device 806 may include, but is not limited to, any combination of the non-volatile media and/or volatile media described herein. Electronic data, including data described herein, may be temporarily and/or permanently stored in storage device 806. For example, data representative of computer-executable instructions 812 configured to direct processor 804 to perform any of the operations described herein may be stored within storage device 806. In some examples, data may be arranged in one or more databases residing within storage device 806.

I/O module 808 may include one or more I/O modules configured to receive user input and provide user output. One or more I/O modules may be used to receive input for a single virtual experience. I/O module 808 may include any hardware, firmware, software, or combination thereof supportive of input and output capabilities. For example, I/O module 808 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 808 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 808 is configured to provide graphical data to a display for presentation to a user. The graphical data may be representative of one or more graphical user interfaces and/or any other graphical content as may serve a particular implementation.

In some examples, any of the systems, computing devices, and/or other components described herein may be implemented by computing device 800. For example, memory 202 may be implemented by storage device 806, and processor 204 may be implemented by processor 804.

It will be recognized by those of ordinary skill in the art that while, in the preceding description, various illustrative embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

Advantages and features of the present disclosure can be further described by the following examples:
Example 1. A system comprising: one or more processors; and memory storing executable instructions that, when executed by the one or more processors, cause a computing device to: direct a pre-separation device to separate precursor ions into a set of distinct fractions of precursor ions based on a physical property of the precursor ions; direct the pre-separation device to sequentially transfer a first subset of distinct fractions of precursor ions included in the set of distinct fractions of precursor ions to a mass spectrometer; direct the mass spectrometer to sequentially produce product ions from each distinct fraction of precursor ions included in the first subset of distinct fractions of precursor ions; direct the mass spectrometer to accumulate, in an ion store over an accumulation time, a first population of product ions, the first population of product ions including the product ions produced from each distinct fraction of precursor ions included in the first subset of distinct fractions of precursor ions; and direct the mass spectrometer to transfer the first population of product ions to a mass analyzer for a mass analysis of the first population of product ions.
Example 2. The system of example 1, wherein the pre-separation device is configured to spatially separate precursor ions into the set of distinct fractions of precursor ions according to mobilities of the precursor ions.
Example 3. The system of example 2, wherein the pre-separation device comprises a trapped ion mobility separator, a drift ion mobility separator, or a differential mobility separator.
Example 4. The system of example 1, wherein the pre-separation device is configured to separate precursor ions into the set of distinct fractions of precursor ions based on a mass-to-charge ratio (m/z) of the precursor ions.
Example 5. The system of example 4, wherein the pre-separation device includes a mass filter, an ion accumulator, an ion sorter, an annular ion trap, or a linear ion trap.
Example 6. The system of example 1, wherein the pre-separation device comprises a plurality of channels configured to store the set of distinct fractions of precursor ions within the plurality of channels, wherein the pre-separation device is configured to sequentially transfer the first subset of distinct fractions of precursor ions from a first subset of channels included in the plurality of channels.
Example 7. The system of example 6, wherein each channel of the plurality of channels is configured to store a distinct fraction of precursor ions included in the set of distinct fractions of precursor ions and sequentially transfer each distinct fraction of precursor ions from the plurality of channels.
Example 8. The system of example 1, wherein the pre-separation device is configured to continuously transport the precursor ions through the pre-separation device to spatially separate the precursor ions into the set of distinct fractions of precursor ions.
Example 9. The system of example 1, wherein each distinct fraction of precursor ions includes a distinct m/z range of precursor ions such that an m/z range of precursor ions included in one distinct fraction of precursor ions does not overlap with another m/z range of precursor ions included in another distinct fraction of precursor ions.
Example 10. The system of example 1, wherein the product ions are produced in a collision cell of the mass spectrometer and the ion store comprises the collision cell.
Example 11. The system of example 1, wherein the ion store is positioned downstream of a collision cell of the mass spectrometer, wherein the collision cell is configured to produce the product ions and sequentially transfer the product ions to the ion store for accumulation of the first population of product ions.
Example 12. The system of example 11, wherein the ion store comprises an ion trap or a C-trap.
Example 13. The system of example 1, wherein the instructions, when executed by the one or more processors, further cause the computing device to adjust one or more operating parameters of the mass spectrometer between successive transfers of distinct fractions of precursor ions from the pre-separation device to the mass spectrometer for processing of the next distinct fraction of precursor ions.
Example 14. The system of example 13, wherein the one or more operating parameters includes a collision energy of a collision cell included in the mass spectrometer and configured to produce the product ions.
Example 15. The system of example 13, wherein the one or more operating parameters includes an m/z isolation window of a mass filter included in the mass spectrometer and configured to filter the set of distinct fractions of precursor ions.
Example 16. The system of example 1, wherein the instructions, when executed by the one or more processors, further cause the computing device to direct the mass spectrometer to acquire a mass spectrum based on the first population of product ions.
Example 17. The system of example 1, wherein the accumulation time is less than an acquisition time for the mass analysis.
Example 18. The system of example 1, wherein the instructions, when executed by the one or more processors, further cause the computing device to: direct the pre-separation device to sequentially transfer a second subset of distinct fractions of precursor ions to the mass spectrometer after the transfer of the first subset of distinct fractions of precursor ions; direct the mass spectrometer to sequentially produce product ions from each distinct fraction of precursor ions included in the second subset of distinct fractions of precursor ions; direct the mass spectrometer to accumulate, in an ion store over another accumulation time, a second population of product ions, the second population of product ions including the product ions produced from each distinct fraction of precursor ions included in the second subset of distinct fractions of precursor ions; and direct the mass spectrometer to transfer the second population of product ions to a mass analyzer for a mass analysis of the second population of product ions.
Example 19. The system of example 18, wherein the second subset of distinct fractions of precursor ions are transferred from the pre-separation device to the mass spectrometer simultaneously with the transfer of the first population of product ions to the mass analyzer.
Example 20. The system of example 18, wherein the instructions, when executed by the one or more processors, further cause the computing device to adjust one or more operating parameters of the mass spectrometer between the transfer of the first subset of distinct fractions of precursor ions and the transfer of the second subset of distinct fractions of precursor ions to the mass spectrometer to target select precursor ions from the second distinct fractions of precursor ions.
Example 21. The system of example 20, wherein the targeting the select precursor ions from the second subset of distinct fractions of precursor ions is based on the mass analysis of the first subset of distinct fractions or precursor ions.
Example 22. A system comprising: a pre-separation device configured to separate precursor ions into a set of distinct fractions of precursor ions based on a physical property of the precursor ions and to sequentially transfer a first subset of distinct fractions of precursor ions included in the set of distinct fractions of precursor ions; and a mass spectrometer positioned downstream of the pre-separation device and configured to receive the first subset of distinct fractions of precursor ions, the mass spectrometer comprising: an ion store configured to accumulate a first population of product ions produced from each distinct fraction of precursor ions included in the first subset of distinct fractions of precursor ions; and a mass analyzer configured to perform a mass analysis of the first population of product ions.
Example 23. The system of example 22, wherein the product ions are produced in a collision cell of the mass spectrometer and the ion store comprises the collision cell.
Example 24. The system of example 22, wherein the ion store is positioned downstream of a collision cell of the mass spectrometer, wherein the collision cell is configured to produce the product ions and sequentially transfer the product ions to the ion store for accumulation of the first population of product ions.
Example 25. A non-transitory computer-readable medium storing instructions that, when executed, direct at least one processor of a computing device for mass spectrometry to perform a process comprising: directing a pre-separation device to separate precursor ions into a set of distinct fractions of precursor ions based on a physical property of the precursor ions; directing the pre-separation device to sequentially transfer a first subset of distinct fractions of precursor ions included in the set of distinct fractions of precursor ions to a mass spectrometer; directing the mass spectrometer to sequentially produce product ions from each distinct fraction of precursor ions included in the first subset of distinct fractions of precursor ions; directing the mass spectrometer to accumulate, in an ion store over an accumulation time, a first population of product ions, the first population of product ions including the product ions produced from each distinct fraction of precursor ions included in the first subset of distinct fractions of precursor ions; and directing the mass spectrometer to transfer the first population of product ions to a mass analyzer for a mass analysis of the first population of product ions.
Example 26. The non-transitory computer-readable medium of example 25, wherein the instructions, when executed by the at least one processor, further cause the computing device to adjust one or more operating parameters of the mass spectrometer between successive transfers of distinct fractions of precursor ions from the pre-separation device to the mass spectrometer for processing of the next distinct fraction of precursor ions.
Example 27. The non-transitory computer-readable medium of example 26, wherein the one or more operating parameters includes a collision energy of a collision cell included in the mass spectrometer and configured to produce the product ions.
Example 28. The non-transitory computer-readable medium of example 26, wherein the one or more operating parameters includes an m/z isolation window of a mass filter included in the mass spectrometer and configured to filter the set of distinct fractions of precursor ions.

## Claims

1. A system comprising:
one or more processors; and
memory storing executable instructions that, when executed by the one or more processors, cause a computing device to:
direct a pre-separation device to separate precursor ions into a set of distinct fractions of precursor ions based on a physical property of the precursor ions;
direct the pre-separation device to sequentially transfer a first subset of distinct fractions of precursor ions included in the set of distinct fractions of precursor ions to a mass spectrometer;
direct the mass spectrometer to sequentially produce product ions from each distinct fraction of precursor ions included in the first subset of distinct fractions of precursor ions;
direct the mass spectrometer to accumulate, in an ion store over an accumulation time, a first population of product ions, the first population of product ions including the product ions produced from each distinct fraction of precursor ions included in the first subset of distinct fractions of precursor ions; and
direct the mass spectrometer to transfer the first population of product ions to a mass analyzer for a mass analysis of the first population of product ions.

2. The system of claim 1, wherein the pre-separation device is configured to spatially separate precursor ions into the set of distinct fractions of precursor ions according to mobilities of the precursor ions, and optionally, wherein the pre-separation device comprises a trapped ion mobility separator, a drift ion mobility separator, or a differential mobility separator.

3. The system of any one of claims 1-2, wherein the pre-separation device is configured to separate precursor ions into the set of distinct fractions of precursor ions based on a mass-to-charge ratio (m/z) of the precursor ions, and optionally, wherein the pre-separation device comprises a mass filter, an ion accumulator, an ion sorter, an annular ion trap, or a linear ion trap.

4. The system of any one of claims 1-3, wherein the pre-separation device comprises a plurality of channels configured to store the set of distinct fractions of precursor ions within the plurality of channels, wherein the pre-separation device is configured to sequentially transfer the first subset of distinct fractions of precursor ions from a first subset of channels included in the plurality of channels, and optionally, wherein each channel of the plurality of channels is configured to store a distinct fraction of precursor ions included in the set of distinct fractions of precursor ions and sequentially transfer each distinct fraction of precursor ions from the plurality of channels.

5. The system of any one of claims 1-4, wherein the pre-separation device is configured to continuously transport the precursor ions through the pre-separation device to spatially separate the precursor ions into the set of distinct fractions of precursor ions.

6. The system of any one of claims 1-5, wherein each distinct fraction of precursor ions includes a distinct m/z range of precursor ions such that an m/z range of precursor ions included in one distinct fraction of precursor ions does not overlap with another m/z range of precursor ions included in another distinct fraction of precursor ions.

7. The system of any one of claims 1-6, wherein the product ions are produced in a collision cell of the mass spectrometer and the ion store comprises the collision cell.

8. The system of any one of claims 1-7, wherein the ion store is positioned downstream of a collision cell of the mass spectrometer, wherein the collision cell is configured to produce the product ions and sequentially transfer the product ions to the ion store for accumulation of the first population of product ions, and optionally wherein the ion store comprises an ion trap or a C-trap.

9. The system of any one of claims 1-8, wherein the instructions, when executed by the one or more processors, further cause the computing device to adjust one or more operating parameters of the mass spectrometer between successive transfers of distinct fractions of precursor ions from the pre-separation device to the mass spectrometer for processing of a next distinct fraction of precursor ions.

10. The system of claim 9, wherein the one or more operating parameters includes a collision energy of a collision cell included in the mass spectrometer and configured to produce the product ions and/or wherein the one or more operating parameters includes an m/z isolation window of a mass filter included in the mass spectrometer and configured to filter the set of distinct fractions of precursor ions.

11. The system of any one of claims 1-10, wherein the instructions, when executed by the one or more processors, further cause the computing device to direct the mass spectrometer to acquire a mass spectrum based on the first population of product ions.

12. The system of any one of claims 1-11, wherein the accumulation time is less than an acquisition time for the mass analysis.

13. The system of any one of claims 1-12, wherein the instructions, when executed by the one or more processors, further cause the computing device to:
direct the pre-separation device to sequentially transfer a second subset of distinct fractions of precursor ions to the mass spectrometer after the transfer of the first subset of distinct fractions of precursor ions;
direct the mass spectrometer to sequentially produce product ions from each distinct fraction of precursor ions included in the second subset of distinct fractions of precursor ions;
direct the mass spectrometer to accumulate, in an ion store over another accumulation time, a second population of product ions, the second population of product ions including the product ions produced from each distinct fraction of precursor ions included in the second subset of distinct fractions of precursor ions; and
direct the mass spectrometer to transfer the second population of product ions to a mass analyzer for a mass analysis of the second population of product ions.

14. The system of claim 13, wherein the instructions, when executed by the one or more processors, further cause the computing device to adjust one or more operating parameters of the mass spectrometer between the transfer of the first subset of distinct fractions of precursor ions and the transfer of the second subset of distinct fractions of precursor ions to the mass spectrometer to target select precursor ions from the second distinct fractions of precursor ions.

15. A non-transitory computer-readable medium storing instructions that, when executed, direct at least one processor of a computing device for mass spectrometry to perform a process comprising:
directing a pre-separation device to separate precursor ions into a set of distinct fractions of precursor ions based on a physical property of the precursor ions;
directing the pre-separation device to sequentially transfer a first subset of distinct fractions of precursor ions included in the set of distinct fractions of precursor ions to a mass spectrometer;
directing the mass spectrometer to sequentially produce product ions from each distinct fraction of precursor ions included in the first subset of distinct fractions of precursor ions;
directing the mass spectrometer to accumulate, in an ion store over an accumulation time, a first population of product ions, the first population of product ions including the product ions produced from each distinct fraction of precursor ions included in the first subset of distinct fractions of precursor ions; and
directing the mass spectrometer to transfer the first population of product ions to a mass analyzer for a mass analysis of the first population of product ions.
